**Europäisches Patentamt**

**European Patent Office**

**Office européen des brevets**

(11) Veröffentlichungsnummer: **0 195 973**
**B1**

(12) **EUROPÄISCHE PATENTSCHRIFT**

(45) Veröffentlichungstag der Patentschrift:
**17.01.90**

(21) Anmeldenummer: **86103090.6**

(22) Anmeldetag: **07.03.86**

51 Int. Cl.⁴: **B60B 39/00**

(54) Schleuderkettenaggregat für Kraftfahrzeuge.

(30) Priorität: **14.03.85 DE 3509061**
**14.03.85 DE 3509062**
**14.03.85 DE 3509063**

(43) Veröffentlichungstag der Anmeldung:
**01.10.86 Patentblatt 86/40**

(45) Bekanntmachung des Hinweises auf die Patenterteilung:
**17.01.90 Patentblatt 90/3**

(84) Benannte Vertragsstaaten:
**AT BE CH DE FR GB IT LI NL SE**

(56) Entgegenhaltungen:
**EP-A- 0 151 098**
**DE-A- 3 100 975**
**FR-A- 2 548 746**
**US-A- 2 543 876**

(73) Patentinhaber: **Gerd Schulz Fahrzeug- und Container-Technik, Besselstrasse 9, D-2100 Hamburg 90(DE)**

(72) Erfinder: **Schulz, Gerd, Besselstrasse 9, D-2100 Hamburg 90(DE)**
Erfinder: **Hartleif, Hans-Peter, Rotbergskamp 20c, D-2100 Hamburg 90(DE)**

(74) Vertreter: **Eisenführ & Speiser, Martinistrasse 24, D-2800 Bremen 1(DE)**

## Beschreibung

Die Erfindung betrifft ein Schleuderkettenaggregat für Kraftfahrzeuge, das einen einseitig mittels zweier beabstandet am Fahrzeug montierbarer Halterungen am Kraftfahrzeug befestigten Halter und eine von diesem getragene Gleitschutzvorrichtung mit einem Schleuderrad aufweist, welches eine Anzahl von Kettensträngen trägt, drehbar an einem Schwenkarm des Halters angeordnet und mittels eines Schwenkantriebes aus einer Ruhe- in eine Betriebsposition verschwenkbar ist, in der das Schleuderrad zur Mitnahme durch ein Fahrzeugrad unter Vorspannung an der fahrzeuginneren Seitenwand des Fahrzeugrades anliegt.

Schleuderkettenaggregate sind im Stand der Technik vielfach beschrieben. Sie bilden einen im wesentlichen bei Nutzfahrzeugen eingesetzten Winterfahrschutz, der bei Bedarf vom Fahrer aus einschaltbar ist und die Traktion zwischen den Antriebsrädern und der Fahrbahn deutlich verbessert.

Erstmals ist ein derartiger Winterfahrschutz in der GB-A 110 674 beschrieben worden. Er war noch vergleichsweise aufwendig aufgebaut und ließ sich mittels eines Seilzugs in Betrieb nehmen. Ausgehend von diesem Stand der Technik sind im Laufe der Jahrzehnte verschiedene Veränderungen und Verbesserungen bekannt geworden. So ist eine pneumatische Betätigung von Schleuderkettenaggregaten, die im übrigen recht voluminös waren, erstmals in der US-A 2 283 948 beschrieben. Eine platzsparende Ausführung kann der US-A 2 442 322 entnommen werden. Die US-A 2 865 471 offenbart vor allem eine neuartige Form des Schleuderrades. Eine recht kompakte Ausführung eines Schleuderkettenaggregates, die jedoch erhebliche Einbauprobleme aufweist, ist in der DE-A 3 100 975 beschrieben. Eine Variante ist in der DE-A 2 914 366 offenbart.

Schließlich offenbart die US-A 2 543 876 ein Schleuderkettenaggregat mit den einleitend genannten Merkmalen und einem Drehkolbenantrieb für den Schwenkarm. Gehalten wird dieses bekannte Gerät mit einer an den Federbriden und mit einer unmittelbar an der Fahrzeugachse angreifenden festen Halterung.

Ein zuschaltbarer Winterfahrschutz gemäß dem angesprochenen Stand der Technik oder aber auch gemäß Abwandlungen, die nicht mit Schleuderketten arbeiten (US-A 2 747 691, US-A 2 771 161, US-A 2 886 138, DE-A 1 162 216, FR-A 1 362 388, FR-A 2 036 889) ist insbesondere für Nutzfahrzeuge nützlich, weil sich deren Aktionsbereich während der Winterzeit regelmäßig über schneereiche und schneefreie Gebiete erstreckt und beim Betrieb mit herkömmlichen Schneeketten eine sehr häufige Montage und Demontage nötig ist, die die Transportzeiten verlängert.

Gleichwohl sind Schleuderkettenaggregate nur in einem vergleichsweise geringen Umfang im Einsatz. Als Ursache hierfür kommt vor allem in Betracht, daß die das Schleuderrad mit dem Fahrzeug verbindenden Halter nicht nur von Hersteller zu Hersteller, sondern in den meisten Fällen auch noch von Fahrzeugtyp zu Fahrzeugtyp jedes Herstellers unterschiedlich ausgebildet sein müssen und in jedem Einzelfall noch in zwei spiegelbildlichen Varianten für die Montage an der rechten und der linken Fahrzeugseite benötigt werden. Diese nahezu unerschöpfliche Typenvielfalt hat zunächst einmal erhebliche Entwicklungskosten, Fertigungskosten und Kosten für die Lagerhaltung zur Folge. Erschwerend hinzu kommt, daß entsprechend viele Montagevorschriften zu beachten sind und daß die für die Nachrüstung zur Verfügung stehenden Werkstätten wegen der Typenvielfalt nicht genügend Erfahrung sammeln können, so daß die Montage des Winterfahrschutzes unnötig verteuert wird.

Schleuderkettenaggregate der eingangs genannten Art arbeiten zudem nur dann unter den verschiedenen vorkommenden Bedingungen einwandfrei, wenn das Schleuderrad in seiner Betriebsposition am Fahrzeugrad eine genau definierte Position einnimmt. Abweichungen von der Sollposition aufgrund äußerer Umstände, z.B. nach dem Wechseln des Reifentyps, führen zu verschleißfördernden Flattererscheinungen des Schleuderrades, zu einem unregelmäßigen Einwurf der Ketten in den Spalt zwischen Fahrzeugrad und Fahrbahn-Oberfläche und im ungünstigsten Fall zu einer dauerhaften Depositionierung des Schleuderrades durch ein Verbiegen des Halters des Schleuderkettenaggregates.

Beim Betrieb der Schleuderkettenaggregate ist außerdem von Zeit zu Zeit ein erhebliches Flattern von Schleuderrad und Schwenkarm zu beobachten, obwohl das durch Reibungsmitnahme vom Fahrzeugrad angetriebene Schleuderrad in exakter Position zum Fahrzeugrad und auch mit einer sich als vorteilhaft erwiesenen Neigung seiner Rotationsebene gegenüber dem Fahrzeugrad ausgerichtet war.

Untersuchungen haben zu der Erkenntnis geführt, daß dieses Flattern, welches sich bei länger anhaltenden Perioden ungünstig nicht nur auf die Lagerung, sondern auch auf den Halter des Schleuderkettenaggregates auswirkt, insbesondere dann auftritt, wenn der treibende Fahrzeugreifen stärker als normal belastet ist oder einen zu geringen Luftdruck aufweist. Es hat sich darüber hinaus gezeigt, daß nach längerem Betrieb mit flatterndem Schleuderrad dieses Flattern fortbesteht, auch wenn Reifenbelastung bzw. Reifendruck auf die Sollwerte zurückgeführt werden.

Vor diesem Hintergrund ist es Aufgabe der Erfindung, ein Schleuderkettenaggregat der eingangs genannten Art anzugeben, das keine für die beiden Fahrzeugseiten unterschiedlichen Teile mehr benötigt und eine schnelle, korrekte und auch sichere Montage der Schleuderkettenaggregate ermöglicht und somit sowohl zu einer Senkung der Gestehungskosten als auch zu einer Senkung der Montagekosten beiträgt.

Aufgabe der Erfindung ist es weiterhin, ein Schleuderkettenaggregat zu schaffen, das eine Feinjustierung und eine Nachjustierung des Schleuderrades beim bzw. nach dem Einbau des Schleuderkettenaggregates mühelos möglich macht.

Der Erfindung liegt außerdem die Aufgabe zugrunde, die Neigung des Schleuderrades zum Flattern wesentlich zu reduzieren.

Der Lösung dieser Aufgaben dienen die in den Patentansprüchen 1 bzw. 20 bzw. 25 bzw. 39 genannten Merkmale.

Bevorzugte Weiterbildungen sind in den Unteransprüchen angegeben.

Der Erfolg der beanspruchten Lösung geht weit über das angestrebte Ziel hinaus.

Betrachtet man den Bereich von der Produktion bis zum Verkauf des Schleuderkettenaggregates, so ist offensichtlich, daß mit dem vorgeschlagenen, aus wenigen unterschiedlichen Teilen bestehenden Halter-System nicht nur keine Rücksicht mehr auf die beiden Einbauseiten am Fahrzeug mehr genommen werden muß, sondern daß mit diesen wenigen Elementen die Masse der vorhandenen Fahrzeugtypen aller Hersteller abgedeckt wird. Untersuchungen haben gezeigt, daß lediglich die Träger des Halters gelegentlich modifiziert werden müssen, daß im übrigen aber allen bekannten Einbauverhältnissen Rechnung getragen wird. Die Werkzeug-, Fertigungs- und Lagerhaltekosten sowie die Kosten der Entwicklung werden drastisch reduziert.

Im Bereich der Montage ist die Kostenreduktion vergleichbar groß. Hierzu muß man sich vergegenwärtigen, daß der Monteur weitgehend unabhängig vom Fahrzeugtyp immer wieder dieselben einfachen Teile bekommt, so daß er sich bei der Montage nicht jedesmal neu auf neue Teile einzustellen hat. Ihm wird bei der Aushändigung der Teile gesagt, an welcher Stelle im Achsbereich der Halter befestigt wird und ihm kann eine beispielsweise aus Kunststoff-Schaum gefertigte einfache Schablone mitgegeben werden, die die räumliche Position des Schleuderrades in allen Achsen gegenüber dem Fahrzeugrad festlegt. Der Monteur legt dann das Schleuderrad in diese Schablone, montiert die Träger und verbindet Träger und Schleuderrad dann mit den wenigen ihm bekannten Teilen, ohne daß noch größere Justierarbeiten vor dem endgültigen Verklemmen oder Verschweißen der Teile nötig werden.

Hervorzuheben ist schließlich, daß der umfangreiche Stand der Technik eine Vielzahl von unterschiedlich ausgebildeten Gleitschutzvorrichtungen und eine gleiche Vielzahl unterschiedlich ausgebildeter Halter hierfür beschreibt, daß aber keiner dieser Halter auch nur annähernd so universell ausgebildet ist wie der erfindungsgemäße Vorschlag.

Bevorzugt liegt der Mittelpunkt der Rotationsebene des Schleuderrades mit Abstand unterhalb des Mittelpunktes eines einstellbaren Kugelgelenkes, das erfindungsgemäß zwischen dem Schwenkarm und dem Schleuderrad angeordnet ist.

In einer bevorzugten Ausführungsform der Erfindung ist vorgesehen, daß das Kugelgelenk eine geteilte Metallbuchse und ein in dessen schalenförmiger Innenbohrung angeordnetes Kugelelement aufweist, welches eine seinen Mittelpunkt durchsetzende Bohrung zur Aufnahme eines Bolzens aufweist, der seinerseits das Schleuderrad trägt und daß die geteilte Buchse in einer im Durchmesser veränderbaren Bohrung am oder im Schwenkarm befestigt ist und daß der Bolzen einen Bund aufweist, der am Kugelelement anliegt.

Während das Positionieren des Schleuderrades bisher allenfalls durch ein Verbiegen von Elementen des Halters vorgenommen werden konnte und deshalb regelmäßig ungenau blieb, zumal die Monteure aus bestimmten Gründen wenig Erfahrung in der Montage und Justage des Schleuderrades hatten, ist die Folge des erfindungsgemäßen Vorschlages, daß nun eine sehr feinfühlige Positionierung auch in beliebigen zeitlichen Abständen von der ursprünglichen Montage des Schleuderkettenaggregates möglich ist und den Monteuren eine preiswerte Einstellschablone zur Verfügung gestellt werden kann, die bisher schon deshalb nicht denkbar war, weil beim Justieren mit erheblichen Kräften und auch mit Wärme an den federnd nachgiebigen Elementen des Halters gearbeitet werden mußte.

Wenn das Schleuderrad erfindungsgemäß in einer vorgegebenen Ebene gegen die Spannung eines Federelementes beweglich am Schwenkarm gelagert ist, kann in einer abgewandelten Ausführungsform das Federelement den Schwenkarm mit einem Hebel verbinden, das Schleuderrad am freien Ende dieses Hebels drehbar gelagert sein und das freie Ende des Hebels sich von dem das Schleuderrad mitnehmenden Fahrzeugrad aus, jenseits des in seiner Betriebsposition befindlichen Schwenkarms befinden.

Ergänzend kann das Schleuderrad gegenüber der vorgegebenen Schwenkebene verstellbar am Hebel befestigt sein und am freien Ende des Hebels/Gehäuses ein mittels einer Klemmvorrichtung feststellbares Kugelgelenk für die bewegliche Anordnung des Schleuderrades gegenüber der vorgegebenen Ebene vorgesehen sein.

Mit Hilfe dieser Weiterbildung wird der Toleranzbereich erweitert, innerhalb dessen das erfindungsgemäß federnd nachlaufende Schleuderrad das Flattern unterbindet. Diese Erweiterung des Toleranzbereiches ist insbesondere in den Fällen hilfreich, in denen beispielsweise der Reifentyp des jeweiligen Fahrzeuges gewechselt wird.

Betriebsversuche mit einem erfindungsgemäß ausgestalteten Schleuderkettenaggregat haben gezeigt, daß das Schleuderrad durchgehend einen hervorragenden ruhigen Lauf auch unter wechselnden Einsatzbedingungen aufweist, der auch nicht gestört wird, wenn Kettenstränge mit Verzögerung in den Freiraum hinter dem Fahrzeug austreten.

Die Erfindung ist nachstehend anhand der in der Zeichnung dargestellten Ausführungsbeispiele erläutert. In der Zeichnung zeigen:

Fig. 1 ein Explosionsdarstellung der für ein erstes Ausführungsbeispiel verwendeten Elemente des Halters,

Fig. 2 eine Ansicht der fahrzeuginneren Seite eines teilweise dargestellten Fahrzeugrades mit an der Rad-Achse montiertem Halter und der von diesem getragenen Gleitschutzvorrichtung gemäß Fig. 1 in deren Betriebsstellung,

Fig. 3 eine Ansicht in Fahrzeuglängsrichtung auf die Anordnung gemäß Fig. 2,

Fig. 4 eine Explosionsdarstellung der das Schleuderrad am Schwenkarm lagernden Teile,

Fig. 5 eine abgewandelte Ausführungsform der Teile gemäß Fig. 4,

Fig. 6 in schematischer Darstellung eine Draufsicht auf den unteren Teil einer abgewandelten Ausführungsform des Schleuderaggregates,

Fig. 7 eine Explosionsdarstellung der Teile eines zwischen Schwenkarm und Schleuderrad angeordneten Schleuderrad-Trägers gemäß Fig. 6, und

Fig. 8 eine weitere abgewandelte Ausführungsform des Schleuderradaggregates.

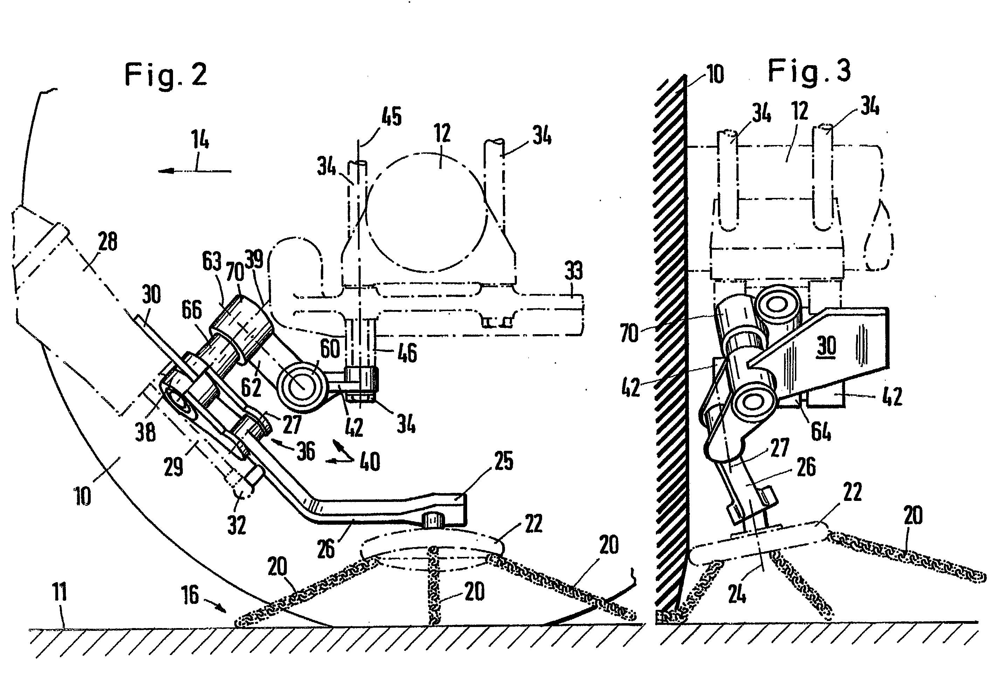

Die insbesondere in Fig. 2 und 3 gezeigte Gleitschutzvorrichtung für ein Fahrzeugrad 10 weist in bekannter Weise eine Anzahl von Kettensträngen 20 auf, die mit ihrem einen Ende an einem Schleuderrad 22 befestigt sind. Wenn sich das Schleuderrad dreht, stehen die Kettenstränge unter dem Einfluß der Fliehkraft etwa radial und auf einem Kegelmantel verteilt vom Schleuderrad ab. Durch die Anordnung und Ausrichtung des Schleuderrades mit Bezug auf das Fahrzeugrad 10 und die Oberfläche der Fahrbahn 11 werden die Kettenstränge nacheinander in den in Fahrtrichtung vorn befindlichen Spalt 16 zwischen dem sich drehenden Fahrzeugrad 10 und der Fahrbahn 11 eingeschleudert und vom Fahrzeugrad überrollt.

Die Rotation des Schleuderrades 22 wird in bekannter Weise dadurch erzeugt, daß das Schleuderrad in Anlage an die fahrzeuginnere Seite des Reifens des Fahrzeugrades 10 gedrückt und durch diesen Kraftschluß vom Reifen in Drehung versetzt wird, solange sich das Fahrzeugrad 10 selbst dreht.

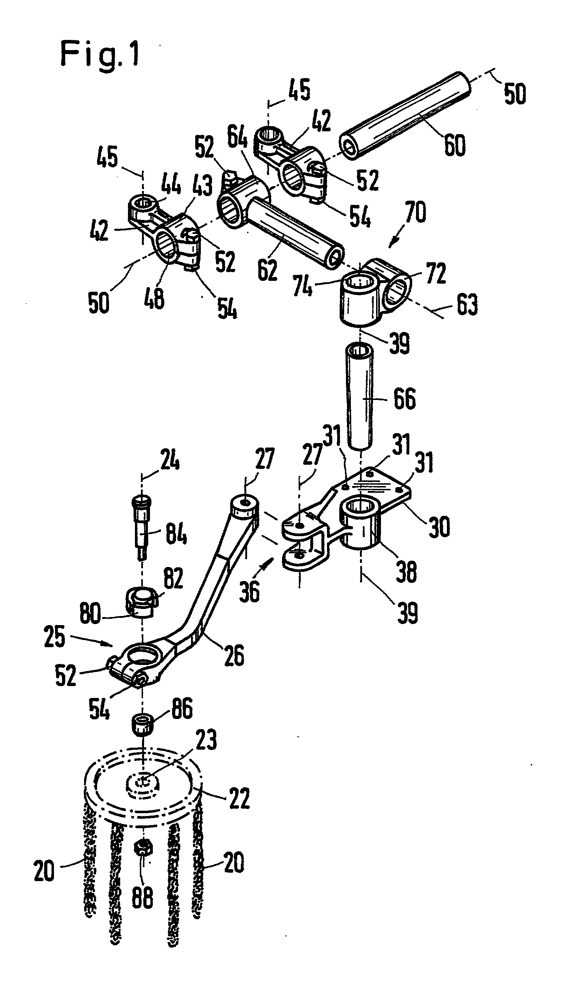

Das Schleuderrad 22 ist mittels eines in Fig. 1 angedeuteten Drehlagers 23 um eine Rotationsachse 24 drehbar am freien Ende 25 eines Schwenkarms 26 befestigt. Der Schwenkarm 26 ist seinerseits um eine Schwenkachse 27 verschwenkbar an einem Tragelement 30 gelagert, welches seinerseits in noch zu beschreibender Weise mit dem Fahrzeug verbunden ist.

Die schwenkbare Lagerung des Schleuderrades 22 ermöglicht einerseits eine einfache Erzeugung der Vorspannung zwischen Schleuderrad 22 und Fahrzeugrad 10 und dient vor allem dazu, das Schleuderrad aus der in den Fig. 2 und 3 gezeichneten Betriebs-Position in eine z. B. der Fig. 1 der DE-OS 31 00 975 entnehmbare Ruhe-Position zu bringen, in der die Kettenstränge vom Schleuderrad 22 aus frei nach unten hängen, die Fahrbahn 11 nicht mehr berühren können und in der das Schleuderrad 22 außer Kontakt mit dem Fahrzeugrad 10 steht.

Als Schwenkantrieb für den Schwenkarm 26 ist im Ausführungsbeispiel ein Pneumatikzylinder 28 mit Kolbenstange 29 vorgesehen. Der Pneumatikzylinder 28 ist mittels nicht dargestellter Schrauben und mittels Bohrungen 31 (Fig. 1) am Tragelement 30 befestigt. Die Kolbenstange 29, deren relative Lage und Ausrichtung insbesondere der Fig. 2 entnehmbar ist, weist an ihrem freien Ende ein Kugelgelenk 32 auf, welches der Verbindung der Kolbenstange 29 mit dem Schwenkarm 26 an einer Stelle zwischen den Achsen 24 und 27 dient. Fig. 2 zeigt die ausgefahrene Stellung der Kolbenstange 29, die der Betriebs-Position des Schwenkarms 26 bzw. des Schleuderrades 22 entspricht. Wird die Kolbenstange 29 des Pneumatikzylinders 28 mittels Druckluft oder einer Feder ein gefahren, dann bewegt sich das Schleuderrad 22 bei Betrachtung der Fig. 3 nach rechts vom Fahrzeugrad 10 weg. Durch die den Fig. 2 und 3 entnehmbare Neigung der Schwenkachse 27 bewegt sich das Schleuderrad 22 dabei gleichzeitig nach oben.

Zum Befestigen der insoweit beschriebenen Gleitschutzvorrichtung am Fahrzeug dient ein aus mehreren Elementen bestehender Halter 40. Er sorgt dafür, daß das Schleuderrad 22 in dessen Betriebs-Position möglichst unabhängig vom Beladezustand des Fahrzeuges immer korrekt zum Fahrzeugrad 10 ausgerichtet steht. Hieraus ergibt sich als eine Vorgabe, daß der Halter 40 im Bereich der ungefederten Massen des Fahrzeuges mit diesem verbunden sein sollte, beispielsweise also gemäß den Fig. 2 und 3 an einer Halteplatte 33 für die nicht dargestellte Feder des Fahrzeuges oder an einer mit der Achse 12 des Fahrzeugrades 10 verbundenen Halterung für einen Stabilisator o. dgl. oder aber hiervon unabhängig direkt an der Achse 12.

Im Ausführungsbeispiel ist eine Einbausituation angegeben, bei der die Halteplatte 33 für die nicht dargestellte Fahrzeugfeder in herkömmlicher Weise mittels Bolzen 34 fest mit der Achse 12 des Fahrzeugrades 10 verbunden ist. Insgesamt sind vier Bolzen 34 vorgesehen, von denen zwei in Vorwärts-Fahrtrichtung (Pfeil 14) vor und die anderen beiden Bolzen 34 hinter der Achse 12 vertikal ausgerichtet stehen.

Achsseitig weist der Halter 40 zwei identische Träger 42 auf. Jeder Träger 42 ist mit einer ersten Bohrung 44 versehen, die der Aufnahme je eines Bolzens 34 dient und deren Mittelachse 45 somit in der Längsachse des jeweiligen Bolzens 34 liegt. Fig. 2 läßt erkennen, daß die zur Festlegung der Träger 42 dienenden beiden Bolzen 34 länger als die beiden anderen Bolzen 34 sind und daß zur vertikalen Ausrichtung der Träger 42 Distanzbuchsen 46 unterhalb der Halteplatte 33 vorgesehen sein können.

Beabstandet von der Bohrung 44 weist jeder Träger 42 eine Halterung 43 in Form eines Auges, einer Buchse o. dgl. mit einer quer zur ersten Bohrung 44 verlaufenden zweiten Bohrung 48 auf, deren Achse 50 im Ausführungsbeispiel senkrecht zur Mittelachse 45 verläuft. Ausweislich den Fig. 1 und 2 werden die Träger 42 derart befestigt, daß ihre Bohrungen 48 fluchten.

Die beiden zweiten Bohrungen 48 der Träger 42 werden von einem - im Ausführungsbeispiel zylindrischen - Tragbolzen 60 durchsetzt, der bei der Montage des Halters 40 fest mit den beiden Trägern 42 verbunden wird. Diese Verbindung kann in jeder bekannten Weise, beispielsweise durch Verschweißen, Verstiften oder Verkleben geschehen. Im Ausführungsbeispiel ist eine Klemmbefestigung vorgesehen. Zu diesem Zweck ist die Bohrung 48 jedes Trägers 42 Teil eines geschlitzten Auges am freien Ende des Trägers 42, welches sich mittels eines Klemmbolzens 52 und einer Mutter 54 zur kraftschlüssigen Festlegung des Tragbolzens 60 verspannen läßt. Gleichwirkend mit dem insoweit beschriebenen Ausführungsbeispiel des Halters 40 wäre ein mit zwei Bohrungen 44 versehener einstückiger Träger, an dem der Tragbolzen 60 so befestigbar ist, daß er zwischen seinen Enden und/oder an mindestens einem seiner Enden zum Anschluß eines weiteren Elementes (z. B. 62) des Halters 40 freiliegt. Die folgende Beschreibung läßt jedoch erkennen, daß die Universalität eines Halters mit zwei separaten Trägern 42 größer und deshalb auch dann einem einstückigen Träger vorzuziehen ist, wenn dieser statt zylindrischer Bohrungen 44 mit Langlöchern ausgerüstet wäre.

Der Tragbolzen 60 des Halters 40 dient der Halterung einer Steckachse 62, die an ihrem einen Ende ein Schwenklager 64 aufweist. Dieses Schwenklager besteht im Ausführungsbeispiel aus einem an das eine Ende der Steckachse 62 angesetzten Klemm-Auge, durch das der Tragbolzen 60 hindurchschiebbar ist und welches sich mittels eines Klemmbolzen 52 und einer nicht gezeichneten Mutter festspannen läßt. Auch hier wie in allen nachstehend angesprochenen vergleichbaren Verbindungs-Fällen zwischen den Bestandteilen des Halters 40 kann nach dem Ausrichten der verschiedenen Elemente deren gegenseitige Sicherung in jeder herkömmlichen Weise geschehen.

Fig. 1 läßt deutlich erkennen, daß die Mittelachse 63 der Steckachse 62 senkrecht zur Achse 50 von Tragbolzen 60 und Bohrungen 48 verläuft. Weiterhin ist erkennbar, daß sich die Steckachse 62 an verschiedenen Stellen zwischen den beiden Trägern 42 oder außerhalb dieser Träger mit dem Tragbolzen 60 verbinden läßt. Hieraus resultiert ein erster Freiheitsgrad für die Montage der Gleitschutzvorrichtung. Der zweite Freiheitsgrad folgt aus der Schwenkbarkeit der Steckachse 62 gegenüber dem Tragbolzen 60 vor deren gegenseitiger Verriegelung/Verklemmung.

Das bereits oben angesprochene Tragelement 30 weist zur um die Achse 27 schwenkbaren Lagerung des Schwenkarms 26 eine Gabel 36 an seinem einen Ende auf, wie insbesondere Fig. 1 zeigt. Zwischen dieser Gabel und dem plattenförmigen anderen Ende des Tragelementes 30, welches mit den Bohrungen 31 versehen ist, befindet sich ein Auge 38 zur Aufnahme der bzw. einer Steckachse (z. B. 62). Die Achse 39 des Auges 38 verläuft im Ausführungsbeispiel parallel zur Schwenkachse 27, und die die beiden Achsen 27, 39 aufnehmende Ebene verläuft im Ausführungsbeispiel senkrecht zur Hauptebene des Tragelements 30, in der das die Bohrungen 31 aufweisende Ende des Tragelementes liegt.

Je nach Einbauverhältnissen kann das Tragelement 30 unmittelbar (nicht gezeichnet) oder mittelbar (Ausführungsbeispiel) an der Steckachse 62 befestigt werden. Zu diesem Zweck sind die Außendurchmesser von Tragbolzen 60, Steckachse 62 und eventueller weiterer Steckachsen 66 im Ausführungsbeispiel untereinander gleich, und diese Teile des Halters sind bevorzugt als Rohre ausgebildet. Demgemäß sind auch die Aufnahmen (Buchsen, Augen etc.) für diese Teile mit gleichen Innendurchmessern versehen, die dem genannten Außendurchmesser angepaßt sind.

Im Ausführungsbeispiel werden für die Montage der Gleitschutzvorrichtung zwei weitere Freiheitsgrade dadurch bereitgestellt, daß für den Anschluß einer weiteren Steckachse 66 an die Steckachse 62 ein Kreuzverbinder 70 vorgesehen ist, der sich auf der Steckachse verschwenken und axial verschieben läßt. Der Kreuzverbinder 70 besteht im wesentlichen aus zwei aneinander befestigten Augen 72, 74 mit Innendurchmessern entsprechend dem Außendurchmesser der Steckachsen. Diese beiden Augen 72, 74 sowie die übrigen bisher erwähnten Augen haben im Ausführungsbeispiel die Form von ausreichend dickwandigen Buchsen. Gemäß Fig. 1 verlaufen die Achsen der Augen 72, 74 mit Abstand voneinander sowie einerseits in Richtung der Mittelachse 63 der Steckachse 62 bzw. andererseits in Richtung der Achse 39 des Auges 38 des Tragelementes 30. Der Verbindung der Augen 38 und 74 dient die weitere Steckachse 66.

Das Tragelement 30 läßt sich in beliebigem Abstand vom Auge 74 des Kreuzverbinders 70 und in beliebiger Winkelstellung gegenüber der Achse 39 an der weiteren Steckachse 66 befestigen, wodurch zwei zusätzliche Freiheitsgrade, insgesamt also im Falle des Ausführungsbeispiels sechs Freiheitsgrade für die Montage der Gleitschutzvorrichtung vorhanden sind. Da schließlich das Tragelement 30 nicht nur in der gezeichneten Lage, sondern auch mit seiner in Fig. 1 sichtbaren Oberfläche nach unten weisend an der Steckachse 66 zu befestigen ist, kann das Tragelement 30 in einer nahezu unbegrenzten Zahl räumlicher Positionen im Bereich zwischen der Achse 12, der Fahrbahn 11 und dem Fahrzeugrad 10 angeordnet werden. Hierdurch wird der angestrebte Erfolg, d. h. also die Verwendbarkeit identischer Halterelemente auf gegenüberliegenden Fahrzeugseiten erreicht. Bildet man den Schwenkarm 26, der auch ein Element des Halters ist beiderseits der die Achsen 24 und 27 aufnehmenden Ebene symmetrisch aus, wie es im Ausführungsbeispiel der Fall ist. dann kann auch der Schwenkarm unverändert auf beiden Seiten des Fahrzeuges verwendet werden.

Die an einigen Stellen des Halters 40 gezeigte Möglichkeit zur klemmenden Verbindung der Halterelemente läßt ein späteres Nachjustieren des Halters zu. Wenn man die Elemente des Halters jedoch nach dem anfänglichen Justieren und nach einem darauffolgenden Verschweißen der Teile (als Alternative zum Verklemmen) nachjustieren will, so läßt sich dies im Bedarfsfall nur in der aus dem Stand der Technik bekannten Weise, d. h. durch Verbiegen einzelner Bereiche des Halters machen. Um für derartige Ausnahmefälle noch eine Möglichkeit zur Nachjustierung zu haben, ist im Ausführungsbeispiel ergänzend eine justierbare Befestigung des Schleuderrades 22 am freien Ende 25 des Schwenkarms 26 vorgesehen.

Nicht dargestellt ist eine abgewandelte Ausführung der Anordnung des Tragbolzens 60 am Fahrzeug. Diese Abwandlung besteht darin, daß die die beiden Halterungen 43 durchsetzende Achse 50 geneigt zu derjenigen Geraden verläuft, die senkrecht auf mindestens einer der weiteren Achsen 45 steht und diese beiden Achsen 45 verbindet. Erreichbar ist diese abgewandelte Anordnung z. B. dadurch, daß die beiden Träger 42 unterschiedlich lang sind, so daß der lichte Abstand der Mitte der Bohrung 48 zur Mitte der zugehörigen Bohrung 44 eines Trägers 42 größer als der entsprechende Abstand des zweiten Trägers ist.

Gemäß Fig. 1, 4, 5, 7 und 8 dient zum Befestigen des Schleuderrades 22 am Schwenkarm 26 ein Kugelgelenk. Es besteht aus einer geteilten Metallbuchse 80, die in eine Bohrung 81 am freien Ende des Schwenkarms 26 eingesetzt ist und dort mittels eines Klemmbolzens 52 sowie einer Mutter 54 festgeklemmt werden kann, da das freie Ende des Schwenkarms 26 von seiner Stirnseite bis in den Bereich der Bohrung 81 geschlitzt ist. Die Buchse 80 weist eine schalen- oder kugelförmige Innenfläche auf, in der ein Kugelelement 82 ruht.

Das Kugelelement 82 weist eine seinen Mittelpunkt durchsetzende, durchgehende Bohrung 83 auf. Wenn das aus Buchse 80 und Kugelelement 82 bestehende Kugelgelenk in die Bohrung 81 des Schwenkarms 26 eingesetzt ist, wird von der Oberseite des Schwenkarms 26 her ein mit einem Bund 85 versehener Bolzen 84 durch die Bohrung 83 des Kugelelementes 82 hindurchgesteckt. Von unten her werden dann zunächst eine Distanzbuchse 86 und dann das Schleuderrad 22 mit dessen Drehlager 23 auf den Bolzen geschoben. Schließlich werden der Bolzen 84, das Kugelgelenk, die Distanzbuchse 86 und das Schleuderrad 22 mittels einer auf den Bolzen 84 geschraubten Mutter 88 fest miteinander verspannt. Das Drehlager 23 sorgt dafür, daß sich das Schleuderrad 22 frei drehen kann.

Anschließend erhält die Rotationsachse 24 des Schleuderrades 22 ihre gewünschte räumliche Lage, die üblicherweise nicht mit der Achse 90 der im Schwenkarm 26 befindlichen Bohrung 81 zusammenfällt. Schließlich wird die Mutter 54 auf dem Klemmbolzen 52 angezogen und dadurch die eingestellte Lage der Rotationsachse 24 fixiert. Ein Nachstellen der Lage der Rotationsachse 24 ist bei Bedarf jederzeit nach Lösen des Klemmbolzens 52 möglich.

Es sei darauf hingewiesen, daß das Kugelgelenk 80, 82 nicht notwendigerweise in der Bohrung 81 des Schwenkarms 26 montiert zu werden braucht, sondern daß das Kugelgelenk auch an oder in einem Ansatz des Schwenkarms vorgesehen sein kann, der seinerseits gegenüber dem Schwenkarm beweglich und/oder verstellbar ist.

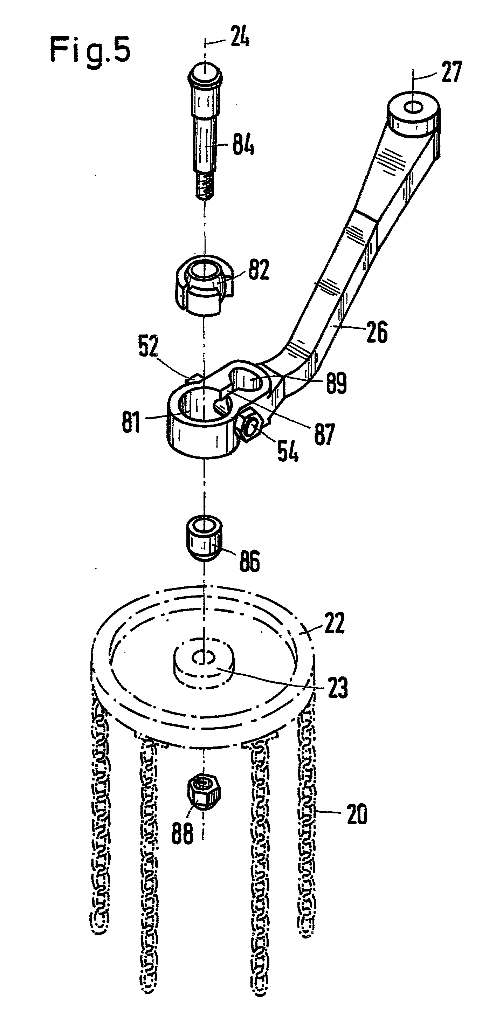

Bei der in Fig. 5 gezeigten abgewandelten Ausführungsform dient der Aufnahme des Kugelgelenkes 80, 82 nicht eine einfache Bohrung des Schwenkarmes 26; vielmehr sind in diesem zwei parallele, durch einen Schlitz 87 verbundene Durchbrechungen 81 und 89 vorgesehen. Im Bereich des Schlitzes 87 erstreckt sich ein Klemmbolzen 52 durch die gegenüberliegenden, vom Schlitz 87 getrennten Abschnitte des Schwenkarmes 26.

Bei dieser Ausführungsform ist der gesamte das Kugelgelenk 80, 82 aufnehmende Bereich des Schwenkarmes 26 mit einer durchgehenden Wandung ausgestattet, was ein verziehungsfreies Gießen des Schwenkarmes 26 erleichtert. Der Schlitz 87 im Inneren des Schwenkarmkopfes ermöglicht durch Anziehen des Klemmbolzens 52 gegen eine Mutter 54 unter Verengung des Schlitzes 87 und Durchmesserverringerung der Durchbrechungen 81, 89 eine sichere Einspannung des Kugelgelenkes 80, 82 in der Durchbrechung 81 des Schwenkarmes 26. Die zweite Durchbrechung 89 dient dabei dazu, eine größere elastische Nachgiebigkeit des Schwenkarmkopfes zu erreichen, die die Verengung des Schlitzes 87 erleichtert.

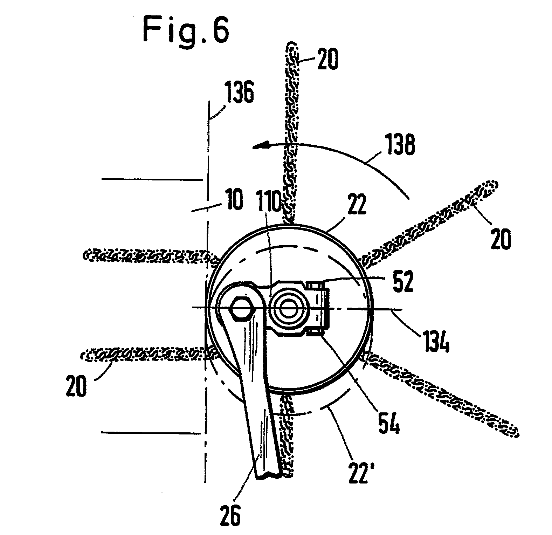

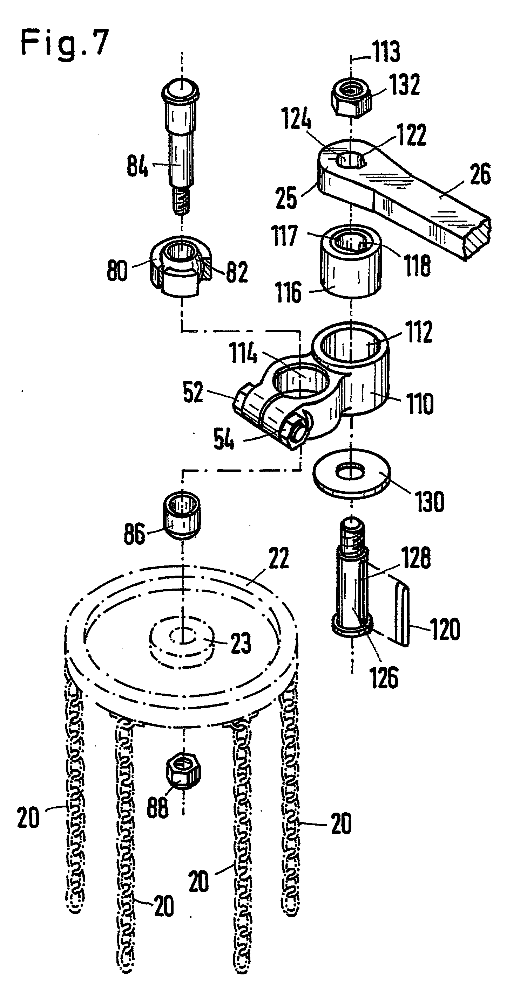

In einer, im folgenden anhand Fig. 6 und 7 näher erläuterten abgewandelten Ausführungsform ist das Schleuderrad 22 unter Zwischenschaltung eines Schleuderrad-Trägers 100 am freien Ende 25 des Schwenkarms 26 befestigt. Dieser wiederum ist um die Schwenkachse 27 drehbar am Tragelement 30 gelagert, und läßt sich in der bereits beschriebenen Weise aus der Betriebsposition des Schleuderrades in die Ruhestellung schwenken.

Der Schleuderradträger 100 weist ein Gehäuse 110 auf, welches von zwei parallelen Bohrungen 112, 114 durchsetzt ist. In die Bohrung 112 ist eine Gummi-Metall-Buchse 116 eingepreßt. Sie ist gegenüber dem Gehäuse 110 unter allen üblichen Betriebssituationen verdrehsicher.

Die Gummi-Metall-Buchse 116 weist in einer Axialbohrung 117 eine axial durchgehende Nut 118 für eine Paßfeder 120 auf. Eine Fortsetzung der Nut 118 ist in Form einer Nut 122 in einer Bohrung 124 im freien Ende 25 des Schwenkarms 26 vorgesehen. Beim Einpressen der Gummi-Metall-Buchse 116 in das Gehäuse 110 wird unter Berücksichtigung der Lage der Nut 122 des Schwenkarms 26 darauf geachtet, daß die beiden Nuten 118, 122 in einer noch zu erörternden relativen Lage des Gehäuses 110 zum Schwenkarm 26 miteinander fluchten.

Zum Befestigen des Gehäuses 110 am Schwenkarm 26 dient ein Bundbolzen 126. Er weist ebenfalls eine Nut 128 für die Paßfeder 120 auf und wird im Ausführungsbeispiel in der aus Fig. 7 ersichtlichen Weise von unten nach oben gesehen durch die Zentralbohrung einer Scheibe 130, durch die Axialbohrung 117 der Gummi-Metall-Buchse 116 und die Bohrung 124 des Schwenkarmes 26 hindurchgeführt. Eine Stop-Mutter 132 wird zum Festziehen des Bundbolzens 126 und damit zur Lagerung des Gehäuses 110 am Schwenkarm 26 verwendet. Die vor dem Einsetzen des Bundbolzens in diesen eingesetzte Paßfeder 120 stellt nun sicher, daß sich die Innenseite der Gummi-Metall-Buchse 116 nicht gegenüber dem Bundbolzen 126 und dem Schwenkarm 26 bewegen kann. Es sei darauf hingewiesen, daß sich die beim Einpressen der Gummi-Metall-Buchse 116 in das Gehäuse 110 eventuell bildenden axialen Gummi-Vorsprünge an den beiden axialen Enden der Bohrung 112 zur Erhöhung der Einpreßkraft mittels der Scheibe 130 und mittels der Unterfläche des Schwenkarms 26 in das Innere der Gummi-Metall-Buchse 116 zurückdrücken lassen.

Das in der beschriebenen Weise am Schwenkarm 26 befestigte Gehäuse 110 läßt sich nun aufgrund der Wirkung des Gummis innerhalb der Gummi-Metall-Buchse 116 elastisch bzw. federnd um die Achse 113 der Bohrung 112 verschwenken.

Dieselbe Beweglichkeit läßt sich in äquivalenter Weise dadurch erreichen, daß das Federelement 116 entweder mit seiner äußeren Buchse in die entsprechend vergrößerte Bohrung 124 des Schwenkarmes eingepreßt oder in anderer Weise am freien Ende 25 befestigt wird und daß die Bohrung 112 des Gehäuses 110 auf das Maß des Bundbolzens 126 verkleinert sowie mit einer zur Nut 118 fluchtend auszurichtenden Nut versehen wird.

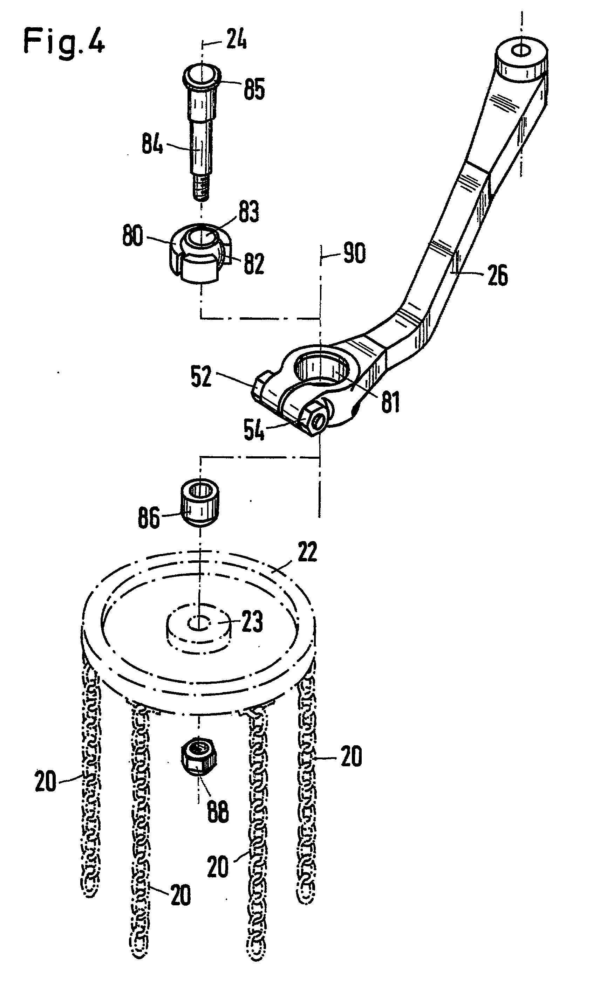

Das Schleuderrad 22 mit dem nur angedeuteten Drehlager 23 kann am Gehäuse 110 mittels eines die Bohrung 114 durchsetzenden Bolzens, der auch das Drehlager 23 durchsetzt, befestigt sein. Bevorzugt ist jedoch die bereits oben unter Bezug auf Fig. 4 beschriebene Befestigung, die es hier ermöglicht, die Rotationsebene des Schleuderrades 22 gegenüber der Schwenkebene des Gehäuses 114 um die Achse 113 zu neigen.

Zu diesem Zweck ist die geteilte Buchse 80 in die Bohrung 114 des Gehäuses 110 eingesetzt. Sie weist auch bei dieser Ausführungsform eine schalenförmige, durchgehende Innenbohrung zur Aufnahme des axial durchbohrten Kugelelementes 82 auf. Der mit einem Bund versehene Bolzen 84 durchsetzt die Axialbohrung des Kugelelementes 82, die unterhalb des Gehäuses 110 vorgesehene Distanzbuchse 86 sowie das Drehlager 23 des Schleuderrades 22 und wird mittels der Mutter 88 festgelegt.

Wie Fig. 7 erkennen läßt, ist das Gehäuse 110 im Bereich seiner Bohrung 114 von außen bis zur Bohrung durchgehend geschlitzt. Weiterhin sind ein Klemmbolzen 52 und eine auf dessen Ende aufgeschraubte Mutter 54 vorgesehen. Der Klemmbolzen durchsetzt eine zusätzliche Bohrung des Gehäuses 110 im Bereich des genannten Schlitzes, so daß mittels des Klemmbolzens 52 und der Mutter 54 die geteilte Buchse 80 innerhalb der Bohrung 114 festgesetzt werden kann. Es leuchtet ein, daß der Bolzen 84 vor dem Festspannen des Klemmbolzens 52 mitsamt des Kugelelementes 82 um ein gewisses Maß gekippt werden kann, so daß die Längsachse des Bolzens 84 nicht notwendigerweise parallel zur Achse 113 steht. Die schalenförmige Innenbohrung der geteilten Buchse 80 und die äußere Oberfläche des Kugelelementes 82 sind rauh ausgebildet, so daß auch bei der Einwirkung von Schlägen eine sichere Positionierung des Bolzens 84 innerhalb des Gehäuses 110 sichergestellt ist.

Die Fig. 3 und 6 zeigen die Art der Montage des Schleuderrad-Trägers 100 relativ zum Schwenkarm 26 und zum Fahrzeugrad 10. Alle wesentlichen Einzelheiten sind den beiden genannten Zeichnungsfiguren ohne weiteres zu entnehmen, so daß auf diese verwiesen wird.

Bevorzugt wird dabei die in Fig. 6 dargestellte Anordnung. Die Verbindungslinie 134 der Mittelpunkte der Bohrungen 112, 114 des Gehäuses 110 steht in der Betriebsposition des Schwenkarms 26 ausweislich Fig. 6 etwa senkrecht zur Projektionslinie 136 der Innenfläche des Fahrzeugrades 10. Ausweislich Fig. 1 liegt die Rotationsebene des Schleuderrades 22 in ihrer Grundstellung parallel unterhalb der Schwenkebene des Schleuderrad-Trägers 100. Die Achse des Bolzens 84 verläuft parallel zur Achse 113 der Bohrung 112. Außerdem befinden sich die Bohrung 112 des Gehäuses 110 und damit auch das freie Ende 25 des Schwenkarms 26 im Bereich zwischen der Innenfläche (Projektionslinie 136) des Fahrzeugrades 10 und der Bohrung 114 des Gehäuses 110. Anders ausgedrückt ragt das Gehäuse 110 also vom Schwenkarm 26 gesehen weg vom Fahrzeugrad 10.

Der Pfeil 138 in Fig. 6 gibt die Drehrichtung des Schleuderrades 22 bei Vorwärtsfahrt des Fahrzeuges an. Die strichpunktierte Kreislinie 22' in Fig. 6 läßt erkennen, daß das Schleuderrad nach hinten ausweicht, wenn die Kettenstränge 20 verzögert vom Fahrzeugrad 10 freigegeben werden. Gleichzeitig ist erkennbar, daß der Schwenkarm 26 aufgrund der gewählten Anordnung bei einer solchen verzögerten Freigabe mit einer zusätzlichen Kraftkomponente gegen das Fahrzeugrad 10 gedrückt wird. Wenn der zunächst verzögerte Kettenstrang schließlich freigegeben ist, kehrt das Schleuderrad 22 wieder in die in Fig. 6 durch eine ausgezogene Kreislinie kenntliche Null-Position zurück.

Bevorzugt wird schließlich, daß der Schleuderrad-Träger 100 so zum Schwenkarm 26 ausgerichtet ist und die beiden oben erwähnten Nuten 122, 128 so miteinander fluchten, daß die Verbindungslinie 134 von einer von der Mittellinie der Achse 12 ausgehenden vertikalen Linie geschnitten wird.

In einer nicht dargestellten Ausführungsform ist das freie Ende 25 des Schwenkarms 26 gabelförmig ausgebildet. Im Zwischenraum zwischen den beiden Gabelelementen liegt dann das die Gummi-Metall-Buchse 116 aufnehmende Ende des Gehäuses 110. Es versteht sich, daß in diesem Fall die Bohrung 124 beide Elemente der Gabel durchsetzt und daß auch die Nut 122 durch beide Elemente hindurchgeht.

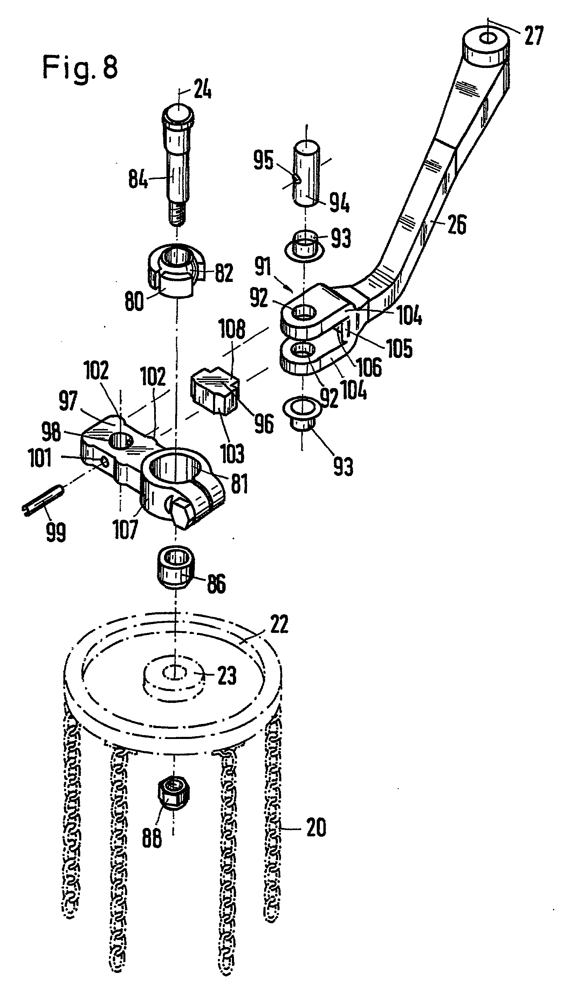

In einer abgewandelten, in Fig. 8 gezeigten Ausführungsform ist statt einer Gummi-Metall-Buchse ein andersartiges Federungssystem für die Lagerung des Schleuderrades 22 am Schwenkarm 26 vorgesehen.

Im Betrieb der oben dargestellten Federung mit Gummi-Metall-Buchse kann es nämlich vorkommen, daß diese durch hohe Beanspruchung oder Alterung beschädigt wird, wobei sich das Gummiteil von der Metallhülse oder dem Metallkern ablöst. Wenn das eintritt, lassen sich die Elemente der Gummi-Metall-Buchse gegeneinander bleibend verdrehen, so daß die Federwirkung nachläßt und schlimmstenfalls ausbleibt.

Um das zu vermeiden, ist bei der in Fig. 8 gezeigten Ausführungsform der Schwenkarmkopf des Schwenkarmes 26 als Gabelkopf 91 so ausgebildet, daß die beiden Gabelarme 104 vertikal übereinander liegen. Jeder Gabelarm 104 weist eine vertikale Durchbohrung 92 auf; die Durchbohrungen 92 fluchten miteinander.

In den Raum zwischen den Gabelarmen 104 ist ein Formstück 96 aus elastischem Material, vorzugsweise aus hartem Gummi, so eingesetzt, daß es an der die Gabelarme 104 verbindenden Rückwand 106 des Gabelkopfes 91 anliegt. Zwei jeweils an einer Vertikalseite des Gabelkopfes von der Rückwand 106 zwischen die Gabelarme 104 vortretende Stege 105 schließen dabei den an der Rückwand 106 anliegenden Teil 108 des Formstücks 96 zwischen sich ein und verhindern so ein seitliches Herausgedrängtwerden des Formstücks 96 aus dem Bereich zwischen den Gabelarmen 104.

Das eingesetzte Formstück 96 erstreckt sich zwischen den Gabelarmen 104 nicht ganz bis in den Bereich von deren Durchbohrungen 92. In diesem Bereich bleibt ein Raum, der der Aufnahme eines Ausgleichshebels 97 dient.

Der Ausgleichshebel 97 ist so geformt, daß er im wesentlichen passend zwischen die Gabelarme 104 eingeschoben werden kann.

Der Ausgleichshebel 97 weist eine Bohrung 98 auf, die in seinem zwischen die Gabelarme 104 eingeschobenen Zustand mit den Durchbohrungen 92 fluchtet. In dieser Stellung wird der Ausgleichshebel 97 mittels einer kurzen, die Durchbohrungen 92 und die Bohrung 98 durchsetzenden Welle 94 schwenkbar an den Gabelarmen 104 gelagert. Die Welle 94 ist dabei in zwei, jeweils in einer Durchbohrung 92 aufgenommenen Buchsen 93 geführt, deren Kragen jeweils an der zugeordneten Innenfläche eines Gabelarmes 104 anliegen.

Eine horizontale Bohrung 101 erstreckt sich durch den Ausgleichshebel 97 und kreuzt dabei die Bohrung 98. Sie fluchtet im Einbauzustand des Ausgleichshebels 97 mit einer entsprechenden Bohrung 95 der Welle 94. Ein Kerbstift 99 ist in den Bohrungen 101 und 95 aufgenommen und verbindet den Ausgleichshebel 97 mit der Welle 94 zu gemeinsamer Drehung.

Auf seiner im Einbauzustand dem Formstück 96 zugewandten Seite trägt der Ausgleichshebel 97 zwei Eckvorsprünge 102, die in Ecknuten 103 des Formstückes 96 formschlüssig eingreifen.

Der Ausgleichshebel trägt außerdem an einer im Einbauzustand zwischen den Gabelarmen 104 seitlich vorstehenden Verlängerung eine Klemmuffe 107, die eine Durchbrechung 81 der bereits beschriebenen Art zum Einspannen eines Kugelgelenkes 80, 82 bildet.

Im Einbauzustand trägt der Ausgleichshebel 97 mittels der Klemmuffe 107 das am Kugelgelenk 80, 82 in der früher beschriebenen Weise befestigte Schleuderrad 22. Bei einer Auslenkung des Schleuderrades 22 durch Schlag o.ä. schwenkt sich der Ausgleichshebel 97 gegenüber dem Gabelkopf 91, wobei er das Formstück 96 deformiert. Die Elastizität des Formstückes 96 fängt dabei die Auslenkung federnd ab und stellt den Ausgleichshebel 97 nachfolgend zurück. Der Eingriff der Eckvorsprünge 102 mit den Ecknuten 103 und der Sitz des Formstückes 96 zwischen den Stegen 105 verhindern dabei, daß das Formstück 96 zwischen den Gabelarmen 104 herausgedrückt wird.

Diese federnde Lagerung des Ausgleichshebels 97 hält das Schleuderrad 22 elastisch gegen den Fahrzeugreifen und bewirkt eine wirksame Flatterunterdrückung auch über lange Zeiträume. Die symmetrische Lagerung des Ausgleichshebels 97 am Formstück 96 bewirkt, daß eine Auslenkung in jeder von beiden Schwenkrichtungen gleichermaßen federnd abgefangen wird. Die Symmetrie der Bauteile gestattet eine Montage auf beiden Fahrzeugseiten.

## Patentansprüche

1. Schleuderkettenaggregat für Kraftfahrzeuge, das einen einseitig mittels zweier beabstandet am Fahrzeug montierbarer Halterungen (43) am Kraftfahrzeug befestigten Halter (40) und eine von diesem getragene Gleitschutzvorrichtung mit einem Schleuderrad (22) aufweist, welches eine Anzahl von Kettensträngen (20) trägt, drehbar an einem Schwenkarm (26) des Halters angeordnet und mittels eines Schwenkantriebes (28) aus einer Ruhe- in eine Betriebsposition verschwenkbar ist, in der das Schleuderrad zur Mitnahme durch ein Fahrzeugrad (10) unter Vorspannung an der fahrzeuginneren Seitenwand des Fahrzeugrades anliegt, dadurch gekennzeichnet, daß ein Tragelement (30) des Halters (40) eine Aufnahme (38) für eine Steckachse (62 oder 66) o.dgl. aufweist, die ihrerseits mittels mindestens eines feststellbaren Schwenklagers (64, 70) an einem Tragbolzen (60) o.dgl. befestigbar ist, der seinerseits mit den Halterungen (43) verbindbar ist.

2. Aggregat nach Anspruch 1, bei welchem die beiden Halterungen (43) Bestandteil je eines Trägers (42) sind und die Träger jeweils zwei senkrecht zueinander ausgerichtete, beabstandete Bohrungen (44, 48) aufweisen, von denen die eine Bohrung (44) einen Innendurchmesser entsprechend dem Außendurchmesser eines fahrzeugseitigen Bolzens (34) und von denen die andere, der Halterung (43) zugeordnete Bohrung einen dem Außendurchmesser des Tragbolzens (60) entsprechenden Innendurchmesser aufweist.

3. Aggregat nach Anspruch 1, mit einer an ihrem einen axialen Ende mit einem Auge (64) versehenen Steckachse (62), bei der die Mittelachse des Auges winklig zur Längsachse (63) der Steckachse (62) verläuft und bei der der Innendurchmesser des Auges (64) dem Außendurchmesser des Tragbolzens (60) entspricht.

4. Aggregat nach Anspruch 3, bei welchem die Achse (50) des Auges (64) senkrecht zur Längsachse der Steckachse (62) verläuft.

5. Aggregat nach Anspruch 2, mit einer an ihrem einen axialen Ende mit einem Auge (64) versehenen Steckachse (62), bei der die Mittelachse des Auges winklig zur Längsachse (63) der Steckachse (62) verläuft und bei der der Innendurchmesser des Auges (64) dem Außendurchmesser des Tragbolzens (60) entspricht.

6. Aggregat nach Anspruch 5, bei dem die Achse (50) des Auges (64) senkrecht zur Längsachse der Steckachse (62) verläuft.

7. Aggregat nach Anspruch 1, mit einem von zwei Augen (72, 74) gebildeten Kreuzverbinder (70), bei dem die Innendurchmesser beider Augen dem Außendurchmesser der Steckachse (62; 66) entsprechen und bei dem die Mittelachsen der Bohrungen der Augen etwa senkrecht zueinander verlaufen und einen Abstand voneinander haben, der mindestens gleich dem Außendurchmesser der Steckachse (62) ist.

8. Aggregat nach Anspruch 7, bei dem die beiden Augen (72, 74) des Kreuzverbinders (70) aus zwei aneinanderliegenden und miteinander verbundenen Buchsen oder Muffen bestehen.

9. Aggregat nach Anspruch 7, bei welchem das Tragelement (30) mittels zweier durch einen Kreuzverbinder (70) untereinander verbundenen Steckachsen (62, 66) mit dem Tragbolzen (60) verbunden ist.

10. Aggregat nach Anspruch 1,
bei dem die Achse (39) des Auges (38) des Tragelementes (80) parallel zur Schwenkachse (27) des Schwenkarms (26) verläuft.

11. Aggregat nach Anspruch 1 mit einem im wesentlichen plattenförmigen Tragelement,
bei welchem die die Schwenkachse (27) des Schwenkarmes (26) und die Achse (39) des Auges (38) gemeinsam aufnehmende Ebene des Tragelementes (30) senkrecht zur Hauptebene der das Tragelement bildenden Platte verläuft.

12. Aggregat nach Anspruch 1,
bei dem das Tragelement an seinem einen Ende eine Gabel (36) zur schwenkbaren Lagerung des Tragarms (26) aufweist und zur Befestigung des Schwenkantriebes (28, 29) von der Gabel (36) aus über den Bereich des Auges (38) hinaus verlängert ist.

13. Aggregat nach Anspruch 1,
bei dem mindestens einige der das Tragelement (30) mit dem Fahrzeug verbindenden Elemente (38, 66, 74, 72, 62, 64, 60, 48) Klemmelemente (52, 54) zur kraftschlüssigen Verbindung aufweisen.

14. Aggregat nach Anspruch 1,
bei dem mindestens einige der das Tragelement (30) mit dem Fahrzeug verbindenden Elemente (38, 66, 74, 72, 62, 64, 60, 48) des Halters miteinander verschweißt, verstiftet o. dgl. sind.

15. Aggregat nach Anspruch 1,
bei welchem die Außendurchmesser aller Steckachsen und des Tragbolzens gleich sind.

16. Aggregat nach Anspruch 1,
bei welchem der das Schleuderrad (22) am freien Ende (25) des Schwenkarmes (26) tragende Bolzen (84) mittels eines klemmend feststellbaren Kugelgelenkes (80, 82) am Schwenkarm (26) befestigt ist.

17. Aggregat nach Anspruch 1,
bei welchem am das Schleuderrad (22) tragenden Ende des Schwenkarmes (26) zwei durch einen Schlitz (87) verbundene parallele Durchbrechungen (81, 89) vorgesehen sind, von denen eine (81) zur Aufnahme eines das Schleuderrad (22) tragenden Bolzens (84) mittels eines klemmend festsetzbaren Kugelgelenkes (80, 82) ausgelegt ist, und bei dem ein den Schlitz (87) zur Verkleinerung des Durchmessers der Durchbrechungen (81, 89) verengender Klemmbolzen (52) vorgesehen ist.

18. Aggregat nach Anspruch 1,
bei dem die Achse (50) der beiden Halterungen (43) schräg zu einer die beiden Achsen (45) verbindenden Geraden ausgerichtet ist.

19. Aggregat nach Anspruch 1,
bei dem die beiden Träger (42) für den Tragbolzen (60) zueinander identisch ausgebildet sind.

20. Schleuderkettenaggregat für Kraftfahrzeuge, das einen einseitig am Kraftfahrzeug befestigten Halter (40) und eine von diesem getragene Gleitschutzvorrichtung mit einem Schleuderrad (22) aufweist, welches eine Anzahl von Kettensträngen (20) trägt, drehbar an einem Schwenkarm (26) des Halters angeordnet und mittels eines Schwenkantriebes (28) aus einer Ruhe- in eine Betriebsposition verschwenkbar ist, in der das Schleuderrad zur Mitnahme durch ein Fahrzeugrad (10) unter Vorspannung an der fahrzeuginneren Seitenwand des Fahrzeugrades anliegt,
dadurch gekennzeichnet, daß zwischen dem Schwenkarm (26) und dem Schleuderrad (22) ein einstellbares Kugelgelenk (80, 82) angeordnet ist.

21. Aggregat nach Anspruch 20,
bei dem der Mittelpunkt der Rotationsebene des Schleuderrades (22) mit Abstand unterhalb des Mittelpunktes des Kugelgelenkes (80, 82) liegt.

22. Aggregat nach Anspruch 20,
bei dem das Kugelgelenk eine geteilte Metallbuchse (80) und ein in dessen schalenförmiger Innenbohrung angeordnetes Kugelelement (82) aufweist, welches eine seinen Mittelpunkt durchsetzende Bohrung (83) zur Aufnahme eines Bolzens (84) aufweist, der seinerseits das Schleuderrad (22) trägt, und bei dem die geteilte Buchse (81) in einer im Durchmesser veränderbaren Bohrung (81) am oder im Schwenkarm (26) befestigt ist.

23. Aggregat nach Anspruch 20,
bei dem der Bolzen (84) einen Bund (85) aufweist, der am Kugelelement (82) anliegt.

24. Aggregat nach Anspruch 22,
bei welchem auf dem Bolzen (84) zwischen der dem Bund (85) abgekehrten Seite des Kugelelementes (83) und dem Drehlager (23) des Schleuderrades (22) eine Distanzbuchse (86) angeordnet ist.

25. Schleuderkettenaggregat für Kraftfahrzeuge, das einen einseitig am Kraftfahrzeug befestigten Halter (40) und eine von diesem getragene Gleitschutzvorrichtung mit einem Schleuderrad (22) aufweist, welches eine Anzahl von Kettensträngen (20) trägt, drehbar und in einer vorgegebenen Ebene gegen die Spannung eines Federelementes (116) beweglich an einem Schwenkarm (26) des Halters gelagert und mittels eines Schwenkantriebes (28) aus einer Ruhe- in eine Betriebsposition verschwenkbar ist, in der das Schleuderrad zur Mitnahme durch ein Fahrzeugrad (10) unter Vorspannung an der fahrzeuginneren Seitenwand des Fahrzeugrades anliegt,
dadurch gekennzeichnet, daß das Federelement (116) den Schwenkarm (26) mit einem Hebel (110) verbindet und das Schleuderrad (22) am freien Ende dieses Hebels drehbar gelagert ist.

26. Schleuderkettenaggregat nach Anspruch 25,
bei welchem sich das freie Ende des Hebels (110) von dem das Schleuderrad (22) mitnehmenden Fahrzeugrad (10) aus jenseits des in seiner Betriebsposition befindlichen Schwenkarms (26) befindet.

27. Schleuderkettenaggregat nach Anspruch 25,
bei dem das Federelement eine Gummi-Metall-Buchse (116) ist, deren äußerer metallischer Ring drehfest mit dem Hebel (110) und dessen innerer Metallring unverdrehbar mit dem Schwenkarm (26) verbunden ist.

28. Schleuderkettenaggregat nach Anspruch 27,
bei welchem im inneren Metallring der Gummi-Metall-Buchse (116) und einer Bohrung (124) des Schwenkarms (26) miteinander fluchtende Nuten (122, 128) und zur Verbindung des Hebels (110) mit dem Schwenkarm ein mit einer Paßfeder (120) ausgerüsteter Bundbolzen (126) vorgesehen ist.

29. Schleuderkettenaggregat nach Anspruch 25,
bei dem der Hebel von einem zwei parallel beabstandete Bohrungen (112, 114) aufweisenden Gehäuse (110) gebildet ist, von denen die eine Bohrung (112) das Federelement (116) und die andere Bohrung (114) ein Befestigungselement (Bolzen 84) für das Schleuderrad (22) aufnimmt.

30. Schleuderkettenaggregat nach Anspruch 29, bei dem das Federelement eine Gummi-Metall-Buchse (116) ist, deren äußerer metallischer Ring drehfest mit dem Gehäuse (110) und dessen innerer Metallring unverdrehbar mit dem Schwenkarm (26) verbunden ist.

31. Schleuderkettenaggregat nach Anspruch 30, bei welchem im inneren Metallring der Gummi-Metall-Buchse (116) und einer Bohrung (124) des Schwenkarms (26) miteinander fluchtende Nuten (122, 128) und zur Verbindung des Gehäuses (110) mit dem Schwenkarm ein mit einer Paßfeder (120) ausgerüsteter Bundbolzen (126) vorgesehen ist.

32. Schleuderkettenaggregat nach Anspruch 29, bei dem das Schleuderrad (22) gegenüber der vorgegebenen Schwenkebene verstellbar am Gehäuse (110) befestigt ist.

33. Schleuderkettenaggregat nach Anspruch 32, bei welchem am freien Ende des Gehäuses (110) ein mittels einer Klemmvorrichtung (52, 54) feststellbares Kugelgelenk (80, 82) für die bewegliche Anordnung des Schleuderrades (22) gegenüber der vorgegebenen Ebene vorgesehen ist.

34. Scheuderkettenaggregat nach Anspruch 33, bei dem das Kugelgelenk eine geteilte Buchse (80) aufweist, die in der Bohrung (114) des Gehäuses (110) festklemmbar und mit einer schalenförmigen Innenbohrung versehen ist, in der ein axial durchbohrtes Kugelelement (82) ruht und der der Lagerung des Schleuderrades (22) am Gehäuse (110) dienende Bolzen (84) die Axialbohrung des Kugelelementes (82) durchsetzt.

35. Schleuderkettenaggregat nach Anspruch 25, bei dem das freie Ende (25) des Schwenkarms (26) gabelförmig ausgebildet und das das Federelement (116) aufweisende Ende des Hebels (110) zwischen den Gabelementen angeordnet ist.

36. Schleuderkettenaggregat nach Anspruch 25, bei dem das Federelement (116) fest am freien Ende des Schwenkarms (26) angeordnet und der Hebel (110) mit einer Bohrung (112) mit einer Nut für die Paßfeder (120) versehen ist.

37. Schleuderkettenaggregat nach Anspruch 29, bei dem das freie Ende (25) des Schwenkarms (26) gabelförmig ausgebildet und das das Federelement (116) aufweisende Ende des Gehäuses (110) zwischen den Gabelelementen angeordnet ist.

38. Schleuderkettenaggregat nach Anspruch 29, bei dem das Federelement (116) fest am freien Ende des Schwenkarms (26) angeordnet und das Gehäuse (110) mit einer Bohrung (112) mit einer Nut für die Paßfeder (120) versehen ist.

39. Schleuderkettenaggregat für Kraftfahrzeuge, das einen einseitig am Kraftfahrzeug befestigten Halter (40) und eine von diesem getragene Gleitschutzvorrichtung mit einem Schleuderrad (22) aufweist, welches eine Anzahl von Kettensträngen (20) trägt, drehbar an einem Schwenkarm (26) des Halters angeordnet und mittels eines Schwenkantriebes (28) aus einer Ruhe- in eine Betriebsposition verschwenkbar ist, in der das Schleuderrad zur Mitnahme durch ein Fahrzeugrad (10) unter Vorspannung an der fahrzeuginneren Seitenwand des Fahrzeugrades anliegt, gekennzeichnet durch einen schwenkbar am freien Ende des Schwenkarmes (26) angelenkten Ausgleichshebel (97), der an seinem angelenkten Ende gegen ein Formstück (96) aus elastischem Material anliegt, welches er bei einer Schwenkbewegung gegenüber dem Schwenkarm (26) elastisch verformt, und der an seinem freien Ende das Schleuderrad (22) trägt.

40. Aggregat nach Anspruch 39, bei welchem der Ausgleichshebel (97) mit seinem angelenkten Ende zwischen zwei Gabelarmen (104) des als Gabelkopf (91) ausgebildeten freien Endes des Schwenkarmes (26) schwenkbar gelagert ist.

41. Aggregat nach Anspruch 40, bei welchem eine Welle (94) fluchtende Bohrungen (92, 95) von Gabelarmen (104) und Ausgleichshebel (97) durchsetzt.

42. Aggregat nach Anspruch 40, bei welchem das Formstück (96) zwischen den Gabelarmen (104), einer diese verbindenden Rückwand (106) des Gabelkopfes (91) und dem Ausgleichshebel (97) im Paßsitz gehalten ist.

43. Aggregat nach Anspruch 42, bei dem zwei von der Rückwand (106) zwischen die Gabelarme (104) vortretende Stege (105) zur seitlichen Abstützung des Formstücks (96) am Gabelkopf (91) vorgesehen sind.

44. Aggregat nach Anspruch 42, bei dem der Ausgleichshebel (97) an der dem Formstück (96) zugewandten Seite formschlüssig mit dem Formstück (96) in Eingriff steht.

45. Aggregat nach Anspruch 44, bei dem der Ausgleichshebel (97) zwei mit entsprechenden Ausnehmungen (103) des Formstücks (96) formschlüssig eingreifende Vorsprünge (102) aufweist.

46. Aggregat nach Anspruch 42, bei dem das Formstück (96) aus Gummi besteht.

47. Aggregat nach Anspruch 39, bei welchem am freien Ende des Ausgleichshebels (97) eine Klemmvorrichtung (107) zur klemmenden Festsetzung eines das Schleuderrad (22) tragenden Kugelgelenkes (80, 82) vorgesehen ist.

**Claims**

1. A chain-flinger unit for motor vehicles, which exhibits a holder (40) which is fastened to the motor vehicle at one side by means of two mountings (43) suitable for mounting on the vehicle at a distance apart and which carries an anti-skid device with a flinger-wheel (22) which carries a number of strands (20) of chain and is arranged to be able to rotate on a swivel-arm (26) of the holder and may be swivelled by means of a drive (28) for swivelling it from a rest position into an operating position in which the flinger-wheel rests under prestress against the inner sidewall of a vehicle wheel (10) in order ot be carried round by the vehicle wheel, characterized in that a bearer element (30) of the holder (40) exhibits a seat (38) for a knockout spindle (62 or 66) or the like, which in turn may be fastened by means of at least one adjustable swivel-bearing (64, 70) to a bearer-bolt (60) or the like, which in turn may be connected to the mountings (43).

2. A unit as in Claim 1, in which each of the two mountings (43) is a constituent of a bearer (42) and each of the bearers exhibits two drilled holes (44, 48) spaced apart and aligned perpendicularly to one another, of which the one drilled hole (44) exhibits an internal diameter corresponding with the outer diameter of a bolt (34) on the vehicle side and the other drilled hole associated with the mounting (43) exhibits an internal diameter corresponding with the outer diameter of the bearer-bolt (60).

3. A unit as in Claim 1, having a knockout spindle (62) which is provided with an eye (64) at one end of its axis and in which the centreline of the eye runs at an angle to the longitudinal axis (63) of the knockout spindle (62) and the internal diameter of the eye (64) corresponds with the outer diameter of the bearer-bolt (60).

4. A unit as in Claim 3, in which the axis (50) of the eye (64) runs perpendicularly to the longitudinal axis of the knockout spindle (62).

5. A unit as in Claim 2, having a knockout spindle (62) which is provided with an eye (64) at one end of its axis and in which the centreline of the eye runs at an angle to the longitudinal axis (63) of the knockout spindle (62) and the internal diameter of the eye (64) corresponds with the outer diameter of the bearer-bolt (60).

6. A unit as in Claim 5, in which the axis (50) of the eye (64) runs perpendicularly to the longitudinal axis of the knockout spindle (62).

7. A unit as in Claim 1, having a cross-connector (70) formed of two eyes (72, 74), in which the internal diameters of both eyes correspond with the outer diameter of the knockout spindle (62; 66) and in which the centrelines of the drilled holes in the eyes run approximately perpendicularly to one another and have a distance apart which is at least equal to the outer diameter of the knockout spindle (62).

8. A unit as in Claim 7, in which the two eyes (72, 74) of the cross-connector (70) consist of two bushes or sockets resting against one another and connected together.

9. A unit as in Claim 7, in which the bearer element (30) is connected to the bearer-bolt (60) by means of two knockout spindles (62, 66) connected together by one cross-connector (70).

10. A unit as in Claim 1, in which the axis (39) of the eye (38) in the bearer element (80) runs in parallel with the axis of swivel (27) of the swivel-arm (26).

11. A unit as in Claim 1, having a bearer element essentially in the form of a plate, in which the plane of the bearer element (30) common to the axis of swivel (27) of the swivel-arm (26) and the axis (39) of the eye (38) runs perpendicularly to the main plane of the plate forming the bearer element.

12. A unit as in Claim 1, in which the bearer element exhibits at one end of it a fork (36) for the swivelling bearing of the bearer-arm (26) and is extended away from the fork (36) beyond the region of the eye (38) for fastening the swivelling drive (28, 29).

13. A unit as in Claim 1, in which at least some of the parts (38, 66, 74, 72, 62, 64, 60, 48) connecting the bearer element (30) to the vehicle exhibit clamping elements (52, 54) for frictional connection.

14. A unit as in Claim 1, in which at least some of the parts (38, 66, 74, 72, 62, 64, 60, 48) of the holder, which connect the bearer element (30) to the vehicle are welded, pinned or the like, together.

15. A unit as in Claim 1, in which the outer diameters of all of the knockout spindles and of the bearer-bolt are the same.

16. A unit as in Claim 1, in which the pin (84) carrying the flinger-wheel (22) at the free end (25) of the swivel-arm (26) is fastened to the swivel-arm (26) by means of a ball-an-socket joint (80, 82) which may be fixed by clamping.

17. A unit as in Claim 1, in which at the end of the swivel-arm (26) carrying the flinger-wheel (22) two parallel openings (81, 89) connected by a slit (87) are provided, one (81) of which is designed to seat a pin (84) carrying the flinger-wheel (22) by means of a ball-and-socket joint (80, 82) which may be fixed by clamping, and in which a clamping-bolt (52) is provided to narrow the slit (87) for reducing the diameter of the openings (81, 89).

18. A unit as in Claim 1, in which the axis (50) of the two mountings (43) is aligned obliquely to a straight line connecting the two axes (45).

19. A unit as in Claim 1, in which the two bearers (42) for the bearer-bolts (60) are made identical with one another.

20. A chain-flinger unit for motor vehicles, which exhibits a holder (40) fastened to the motor vehicle at one side and carrying an anti-skid device with a flinger-wheel (22) which carries a number of strands (20) of chain and is arranged to be able to rotate on a swivel-arm (26) of the holder and may be swivelled by means of a drive (28) for swivelling it from a rest position into an operating position in which the flinger-wheel rests under prestress against the inner sidewall of a vehicle wheel (10) in order to be carried round by the vehicle wheel, characterized in that between the swivel-arm (26) and the flinger-wheel (22) an adjustable ball-and-socket joint (80, 82) is arranged.

21. A unit as in Claim 20, in which the centre of the plane of rotation of the flinger-wheel (22) lies at a distance below the centre of the ball-and-socket joint (80, 82).

22. A unit as in Claim 20, in which the ball-and-socket joint exhibits a split metal bush (80) and a ball element (82) which is arranged in its dish-shaped inner bore and exhibits a hole (83) drilled to pass through its centre for seating a pin (84) which in turn carries the flinger-wheel (22), and in which the split bush (81) is fastened onto or into the swivel-arm (26) in a drilled hole (81) of alterable diameter.

23. A unit as in Claim 20, in which the pin (84) exhibits a collar (85) which rests against the ball element (82).

24. A unit as in Claim 22, in which a spacer-bush (86) is arranged on the pin (84) between the side of the ball element (83) remote from the collar (85) and the rotary bearing (23) of the flinger-wheel (22).

25. A chain-flinger unit for motor vehicles, which exhibits a holder (40) fastened to the motor vehicle at one side and carrying an anti-skid device with a flinger-wheel (22) which carries a number of strands (20) of chain and is supported on a swivel-arm (26) of the holder to be able to rotate and to move in a predetermined plane against the tension of a spring element (116) and which may be swivelled by means of a drive (28) for swivelling it from a rest position into an operating position in which the flinger-wheel rests under prestress against the inner sidewall of a vehicle wheel (10) in order to be carried round by the vehicle wheel, characterized in that the spring element (116) connects the swivel-arm (26) to a lever (110) and the flinger-wheel (22) is supported to be able to rotate at the free end of this lever.

26. A chain-flinger unit as in Claim 25, in which with the swivel-arm (26) lying in its operating position the free end of the lever (110) lies on the far side of it from the vehicle wheel (10) which carries the flinger-wheel (22) round with it.

27. A chain-flinger unit as in Claim 25, in which the spring element is a rubber-metal bush (116) of which the outer metal ring is connected fixedly in rotation to the lever (110) and the inner metal ring is connected to be unable to twist against the swivel-arm (26).

28. A chain-flinger unit as in Claim 27, in which grooves (122, 128) aligned with one another are provided in the inner metal ring of the rubber-metal bush (116) and of a hole (124) drilled in the swivel-arm (26) and a shouldered bolt (126) equipped with a feather key (120) is provided for connecting the lever (110) to the swivel-arm.

29. A chain-flinger unit as in Claim 25, in which the lever is formed by a housing (110) exhibiting two spaced parallel drilled holes (112, 114) of which the one drilled hole (112) receives the spring element (116) and the other drilled hole (114) receives a fastener element (pin 84) for the flinger-wheel (22).

30. A chain-flinger unit as in Claim 29, in which the spring element is a rubber-metal bush (116) of which the outer metal ring is connected fixedly in rotation to the housing (110) and the inner metal ring is connected to be unable to twist against the swivel-arm (26).

31. A chain-flinger unit as in Claim 30, in which grooves (122, 128) aligned with one another are provided in the inner metal ring of the rubber-metal bush (116) and of a hole (124) drilled in the swivel-arm (26) and a shouldered bolt (126) equipped with a feather key (120) is provided for connecting the housing (110) to the swivel-arm.

32. A chain-flinger unit as in Claim 29, in which the flinger-wheel (22) is fastened to the housing (110) to be adjustable with respect to the predetermined plane of swivel.

33. A chain-flinger unit as in Claim 32, in which a ball-and-socket joint (80, 82) which may be fixed by means of a clamping device (52, 54) is provided at the free end of the housing (110) for the movable arrangement of the flinger-wheel (22) with respect to the predetermined plane.

34. A chain-flinger unit as in Claim 33, in which the ball-and-socket joint exhibits a split bush (80) which may be clamped firmly in the hole (114) drilled in the housing (110) and is provided with a dish-shaped inner bore in which a ball element (82) drilled through axially rests, and the pin (84) serving as the bearing of the flinger-wheel (22) on the housing (110) passes through the axial hole drilled in the ball element (82).

35. A chain-flinger unit as in Claim 25, in which the free end (25) of the swivel-arm (26) is made fork-shaped and the end of the lever (110) exhibiting the spring element (116) is arranged between the prongs of the fork.

36. A chain-flinger unit as in Claim 25, in which the spring element (116) is arranged fixed at the free end of the swivel-arm (26) and the lever (110) is provided with a drilled hole (112) with a groove for the feather key (120).

37. A chain-flinger unit as in Claim 29, in which the free end (25) of the swivel-arm (26) is made fork-shaped and the end of the housing (110) exhibiting the spring element (116) is arranged between the prongs of the fork.

38. A chain-flinger unit as in Claim 29, in which the spring element (116) is arranged fixed at the free end of the swivel-arm (26) and the housing (110) is provided with a drilled hole (112) with a groove for the feather key (120).

39. A chain-flinger unit for motor vehicles, which exhibits a holder (40) fastened to the motor vehicle at one side and carrying an anti-skid device with a flinger-wheel (22) which carries a number of strands (20) of chain and is arranged to be able to rotate on a swivel-arm (26) of the holder and may be swivelled by means of a drive (28) for swivelling it from a rest position into an operating position in which the flinger-wheel rests under prestress against the inner sidewall of a vehicle wheel (10) in order to be carried round by the vehicle wheel, characterized by a compensator lever (97) which is hinged to be able to swivel at the free end of the swivel-arm (26) and rests at its hinged end against a moulded piece (96) of elastic material which it deforms elastically during a swivelling movement with respect to the swivel-arm (26), whilst at its free end it carries the flinger-wheel (22).

40. A unit as in Claim 39, in which the compensator lever (97) at its hinged end is supported to be able to swivel between two arms (104) of the fork at the free end of the swivel-arm (26), which is made as a fork head (91).

41. A unit as in Claim 40, in which a shaft (94) passes through holes (92, 95) drilled in the fork arms (104) and compensator lever (97).

42. A unit as in Claim 40, in which the moulded piece (96) is held in a snug fit between the fork arms (104), a rear wall (106) of the fork head (91) connecting them, and the compensator lever (97).

43. A unit as in Claim 42, in which two flanges (105) projecting from the rear wall (106) between the fork arms (104) are provided for supporting the moulded piece (96) on the fork head (91) at the sides.

44. A unit as in Claim 42, in which the compensator lever (97) at the side next the moulded piece (96) engages with the moulded piece (96) in a close fit.

45. A unit as in Claim 44, in which the compensator lever (97) exhibits two projections (102) which engage in a close fit with corresponding recesses (103) in the moulded piece (96).

46. A unit as in Claim 42, in which the moulded piece (96) consists of rubber.

47. A unit as in Claim 39, in which a clamping device (107) for fixing by clamping a ball-and-socket joint (80, 82) carrying the flinger-wheel (22), is provided at the free end of the compensator lever (97).

## Revendications

1. Appareil à chaînes centrifugées pour véhicules automobiles, qui présente un support (40) fixé d'un côté sur le véhicule automobile à l'aide de deux fixations (43) montables de manière écartée sur le véhicule et un dispositif anti-patinage porté par ce support et muni d'une roue de centrifugation (22) qui supporte un certain nombre de bouts de chaîne, en étant agencée de manière à pouvoir tourner sur un bras de pivotement (26) du support et en étant capable de pivoter à l'aide d'un organe d'entraînement en pivotement (28) depuis une position de repos à une position de service dans laquelle la roue de centrifugation est en appui, avec précontrainte, sur le flanc interne d'une roue du véhicule pour être entraînée par la roue de véhicule (10), caractérisé en ce qu'un élément porteur (30) du support (40) présente un logement (38) pour un axe à emmancher (62 ou 66) ou un élément analogue qui, à son tour, peut être fixé au moyen d'au moins un palier de pivotement (64, 70), blocable, sur une tige de support (60) ou un élément analogue qui, à son tour, peut être relié aux fixations (43).

2. Appareil suivant la revendication 1, dans lequel les deux fixations (43) sont chacune un élément constitutif d'un élément de support (42), les éléments de support présentant chacun deux alésages (44, 48) qui sont situés à distance l'un de l'autre et orientés perpendiculairement l'un à l'autre et dont l'un (44) présente un diamètre interne correspondant au diamètre externe d'un boulon (34) du côté véhicule et dont l'autre, attribué à la fixation (43), présente un diamètre interne correspondant au diamètre externe de la tige de support (60).

3. Appareil suivant la revendication 1, comprenant un axe à emmancher (62) qui est pourvu d'un œillet (64) à une de ses extrémités axiales, dans lequel l'axe central de l'œillet s'étend de manière angulaire par rapport à l'axe longitudinal (63) de l'axe à emmancher (62) et dans lequel le diamètre interne de l'œillet (64) correspond au diamètre externe de la tige de support (60).

4. Appareil suivant la revendication 3, dans lequel l'axe (50) de l'œillet (64) s'étend perpendiculairement à l'axe longitudinal de l'axe à emmancher (62).

5. Appareil suivant la revendication 2, comprenant un axe à emmancher (62) pourvu d'un œillet (64) à une de ses extrémités axiales, dans lequel l'axe central de l'œillet s'étend de manière angulaire par rapport à l'axe longitudinal (63) de l'axe à emmancher (62) et dans lequel le diamètre interne de l'œillet (64) correspond au diamètre externe de la tige de support (60).

6. Appareil suivant la revendication 5, dans lequel l'axe (50) de l'œillet (64) s'étend perpendiculairement à l'axe longitudinal de l'axe à emmancher (62).

7. Appareil suivant la revendication 1, comprenant un élément de liaison en croix (70) formé de deux œillets (72, 74), dans lequel les diamètres internes des deux œillets correspondent au diamètre externe de l'axe à emmancher (62; 66) et dans lequel les axes centraux des alésages des œillets s'étendent approximativement perpendiculairement l'un à l'autre et sont situés à une distance l'un de l'autre qui est au moins égale au diamètre externe de l'axe à emmancher (62).

8. Appareil suivant la revendication 7, dans lequel les deux œillets (72, 74) de l'élément de liaison en croix (70) sont constitués de deux douilles ou manchons adjacents et reliés l'un à l'autre.

9. Appareil suivant la revendication 7, dans lequel l'élément porteur (30) est relié à la tige de support (60) au moyen de deux axes à emmancher (62, 66) qui sont reliés l'un au-dessus de l'autre par un élément de liaison en croix (70).

10. Appareil suivant la revendication 1, dans lequel l'axe (39) de l'œillet (38) de l'élément porteur (30) s'étend parallèlement à l'axe de pivotement (27) du bras de pivotement (26).

11. Appareil suivant la revendication 1, comprenant un élément porteur sensiblement en forme de plaque, dans lequel le plan de l'élément porteur (30) qui comprend conjointement l'axe de pivotement (27) du bras de pivotement (26) et l'axe (39) de l'œillet (38) s'étend perpendiculairement au plan principal de la plaque formant l'élément porteur.

12. Appareil suivant la revendication 1, dans lequel l'élément porteur présente à une de ses extrémités une fourche (36) pour supporter le bras de pivotement (26) de manière à permettre son pivotement et dans lequel, pour la fixation de l'organe d'entraînement en pivotement (28, 29), l'élément porteur est, en partant de la fourche (36), prolongé au-delà de la zone de l'œillet (38).

13. Appareil suivant la revendication 1, dans lequel au moins certains des éléments (38, 66, 74, 72, 62, 64, 60, 48) reliant l'élément porteur (30) au véhicule présentent des éléments de serrage (52, 54) pour obtenir une liaison due à la force.

14. Appareil suivant la revendication 1, dans lequel au moins certains des éléments (38, 66, 74, 72, 62, 64, 60, 48) du support qui relient l'élément porteur (30) au véhicule sont mutuellement soudés, fixés par des goujons, ou d'une manière analogue.

15. Appareil suivant la revendication 1, dans lequel les diamètres externes de tous les axes à emmancher et de la tige de support sont identiques.

16. Appareil suivant la revendication 1, dans lequel la tige (84) supportant la roue de centrifugation (22) à l'extrémité libre (25) du bras de pivotement (26) est fixée sur le bras de pivotement (26) au moyen d'un joint à rotule (80, 82) qui peut être bloqué par serrage.

17. Appareil suivant la revendication 1, dans lequel, sur l'extrémité du bras de pivotement (26) qui porte la roue de centrifugation (22), on prévoit deux passages (81, 89) parallèles, qui sont reliés par une fente (87) et dont l'un (81) est conçu pour recevoir une tige (84) portant la roue de centrifugation (22) au moyen d'un joint à rotule (80, 82) fixable par serrage, et dans lequel un boulon de serrage (52) rétrécissant la fente (87) pour réduire le diamètre des passages (81, 89) est prévu.

18. Appareil suivant la revendication 1, dans lequel l'axe (50) des deux fixations (43) est dirigé en oblique par rapport à une droite reliant les deux axes (45).

19. Appareil suivant la revendication 1, dans lequel les deux éléments de support (42) de la tige de support (60) sont réalisés sous une forme mutuellement identique.

20. Appareil à chaînes centrifugées pour véhicules automobiles, qui présente un support (40) fixé d'un côté sur le véhicule automobile et un dispositif anti-patinage porté par ce support et muni d'une roue de centrifugation (22) qui porte un certain nombre de bouts de chaîne (20), en étant agencée de manière à pouvoir tourner sur un bras de pivotement (26) du support et en étant capable, au moyen d'un organe d'entraînement en pivotement (28), de pivoter d'une position de repos dans une position de service dans laquelle la roue de centrifugation est, avec précontrainte, en appui sur le flanc interne d'une roue de véhicule pour être entraînée par la roue de véhicule (10), caractérisé en ce qu'un joint à rotule (80, 82) ajustable est agencé entre le bras de pivotement (26) et la roue de centrifugation (22).

21. Appareil suivant la revendication 20, dans lequel le point central du plan de rotation de la roue de centrifugation (22) est situé à une certaine distance en dessous du point central du joint à rotule (80, 82).

22. Appareil suivant la revendication 20, dans lequel le joint à rotule présente une douille métallique fendue (80) et un élément sphérique (82) qui est agencé dans l'alésage interne en forme de coque de cette douille et qui présente un alésage (83) passant par son point central, pour recevoir une tige (84) qui, à son tour, porte la roue de centrifugation (22), et dans lequel la douille fendue (80) est fixée dans un alésage (81) de diamètre modifiable prévu sur ou dans le bras de pivotement (26).

23. Appareil suivant la revendication 20, dans lequel la tige (84) présente un collet (85) qui est en appui sur l'élément sphérique (82).

24. Appareil suivant la revendication 22, dans lequel une douille d'écartement (86) est agencée sur la tige (84) entre le côté de l'élément sphérique (83), qui est situé à l'opposé du collet (85), et le palier de pivotement (23) de la roue de centrifugation (22).

25. Appareil à chaînes centrifugées pour véhicules automobiles, qui présente un support (40) fixé d'un côté sur le véhicule automobile et un dispositif anti-patinage porté par ce support et muni d'une roue de centrifugation (22) qui porte un certain nombre de bouts de chaîne (20), en étant supportée sur un bras de pivotement (26) du support de manière à pouvoir tourner et être déplacée dans un plan prédéterminé à l'encontre de la tension d'un élément de ressort (116) et en étant capable de pivoter au moyen d'un organe d'entraînement en pivotement (28) depuis une position de repos à une position de service dans laquelle la roue de centrifugation est en appui, avec précontrainte, sur le flanc interne d'une roue de véhicule (10), pour être entraînée par celle-ci, caractérisé en ce que l'élément de ressort (116) relie le bras de pivotement (26) à un levier (110) et en ce que la roue de centrifugation (22) est supportée de manière à pouvoir tourner à l'extrémité libre de ce levier.

26. Appareil à chaînes centrifugées suivant la revendication 25, dans lequel l'extrémité libre du levier (110) se trouve, par rapport à la roue de véhicule (10) entraînant la roue de centrifugation (22), de l'autre côté du bras de pivotement (26) situé dans sa position de service.

27. Appareil à chaînes centrifugées suivant la revendication 25, dans lequel l'élément de ressort est une douille de caoutchouc-métal (116) dont l'anneau métallique extérieur est relié au levier (110) de manière à ne pas permettre de rotation et dont l'anneau métallique intérieur est relié au bras de pivotement (26) de manière à ne pas permettre de rotation.

28. Appareil à chaînes centrifugées suivant la revendication 27, dans lequel il est prévu des rainures (122, 128) qui s'alignent mutuellement dans l'anneau métallique intérieur de la douille de caoutchouc-métal (116) et dans un alésage (124) du bras de pivotement (26) et, pour la liaison du levier (110) avec le bras de pivotement, une tige à collet (126) équipée d'un ressort d'ajustage (120).

29. Appareil à chaînes centrifugées suivant la revendication 25, dans lequel le levier est formé d'un corps (110) qui présente deux alésages (112, 114) disposés à distance, parallèlement, et dont l'un des alésages (112) reçoit l'élément de ressort (116) et l'autre alésage (114) un élément de fixation (tige 84) de la roue de centrifugation (22).

30. Appareil à chaînes centrifugées suivant la revendication 29, dans lequel l'élément de ressort est une douille de caoutchouc-métal (116) dont l'anneau métallique extérieur est relié au corps (110) de manière à ne pas permettre de rotation et dont l'anneau métallique intérieur est relié au bras de pivotement (26) de manière à ne pas permettre de pivotement.

31. Appareil à chaînes centrifugées suivant la revendication 30, dans lequel il est prévu des rainures (122, 128) qui s'alignent mutuellement dans l'anneau métallique intérieur de la douille de caoutchouc-métal (116) et dans un alésage (124) du bras de pivotement (26) et, pour la liaison du corps (110) au bras de pivotement, une tige à collet (126) équipée d'un ressort d'ajustage (120).

32. Appareil à chaînes centrifugées suivant la revendication 29, dans lequel la roue de centrifugation (22) est fixée sur le corps (110) de manière réglable par rapport au plan de pivotement prédéterminé.

33. Appareil à chaînes centrifugées suivant la revendication 32, dans lequel un joint à rotule (80, 82) blocable au moyen d'un dispositif de serrage (52, 54) est prévu à l'extrémité libre du corps (110) pour l'agencement amovible de la roue de centrifugation (22) par rapport au plan prédéterminé.

34. Appareil à chaînes centrifugées suivant la revendication 33, dans lequel le joint à rotule présente une douille fendue (80) qui peut être serrée à bloc dans l'alésage (114) du corps (110) et qui est pourvue d'un alésage interne en forme de coque dans lequel repose un élément sphérique percé axialement (82), et dans lequel la tige (84) servant au support de la roue de centrifugation (22) sur le corps (110) traverse l'alésage axial de l'élément sphérique (82).

35. Appareil à chaînes centrifugées suivant la revendication 25, dans lequel l'extrémité libre (25) du bras de pivotement (26) est réalisée sous la forme d'une fourche et dans lequel l'extrémité du levier (110) qui présente l'élément de ressort (116) est agencée entre les éléments de fourche.

36. Appareil à chaînes centrifugées suivant la revendication 25, dans lequel l'élément de ressort (116) est agencé de manière fixe à l'extrémité libre du bras de pivotement (26) et dans lequel le levier (110) est pourvu d'un alésage (112) présentant une rainure pour le ressort d'ajustage (120).

37. Appareil à chaînes centrifugées suivant la revendication 29, dans lequel l'extrémité libre (25) du bras de pivotement (26) est réalisée sous la forme d'une fourche et dans lequel l'extrémité du corps (110) qui présente l'élément de ressort (116) est agencée entre les éléments de fourche.

38. Appareil à chaînes centrifugées suivant la revendication 29, dans lequel l'élément de ressort (116) est agencé de manière fixe à l'extrémité libre du bras de pivotement (26) et dans lequel le corps (110) est pourvu d'un alésage (112) présentant une rainure pour le ressort d'ajustage (120).

39. Appareil à chaînes centrifugées pour véhicules automobiles, qui présente un support (40) fixé d'un côté sur le véhicule automobile et un dispositif anti-patinage porté par ce support et muni d'une roue de centrifugation (22) qui porte un certain nombre de bouts de chaîne (20), en étant agencée de manière à pouvoir tourner sur un bras de pivotement (26) du support et en étant capable de pivoter à l'aide d'un organe d'entraînement en pivotement (28) d'une position de repos à une position de service dans laquelle la roue de centrifugation est en appui avec précontrainte sur le flanc interne d'une roue de véhicule, pour être entraînée par la roue de véhicule (10), caractérisé par un levier de compensation (97) qui est articulé de manière à pouvoir pivoter sur l'extrémité libre du bras de pivotement (26) et est, à son extrémité articulée, en appui contre une pièce façonnée (96) en une matière élastique qu'il déforme élastiquement lors d'un mouvement de pivotement par rapport au bras de pivotement (26) et qui porte à son extrémité libre la roue de centrifugation (22).

40. Appareil suivant la revendication 39, dans lequel le levier de compensation (97) est, à son extrémité articulée, supporté de manière à pouvoir pivoter entre deux fourchons (104) de l'extrémité libre du bras de pivotement (26) qui est réalisée sous la forme d'une tête de fourche (91).

41. Appareil suivant la revendication 40, dans lequel un arbre (94) traverse des alésages alignés (92, 98) des fourchons (104) et du levier de compensation (97).

42. Appareil suivant la revendication 40, dans lequel la pièce façonnée (96) est maintenue à l'état finement ajusté entre les fourchons (104), une paroi arrière (106) de la tête de fourche (91) qui relie ces fourchons et le levier de compensation (97).

43. Appareil suivant la revendication 42, dans lequel deux nervures (105) faisant saillie depuis la paroi arrière (106) entre les fourchons (104) sont prévues pour le soutien latéral de la pièce façonnée (96) sur la tête de fourche (91).

44. Appareil suivant la revendication 42, dans lequel le levier de compensation (97) est en prise avec la pièce façonnée (96) de manière à former une liaison due à la forme, du côté tourné vers la pièce façonnée (96).

45. Appareil suivant la revendication 44, dans lequel le levier de compensation (97) présente deux saillies (102) qui entrent en prise, de manière à former une liaison de forme, avec des évidements correspondants (103) de la pièce façonnée (96).

46. Appareil suivant la revendication 42, dans lequel la pièce façonnée (96) est constituée de caoutchouc.

47. Appareil suivant la revendication 39, dans lequel un dispositif de serrage (107) est prévu à l'extrémité libre du levier de compensation (97) pour fixer par serrage un joint à rotule (80, 82) supportant la roue de centrifugation (22).

# Fig.1

**Fig. 2**

**Fig. 3**

# Fig.4

# Fig.5

Fig.6

# Fig.7

Fig. 8